(19) **Europäisches Patentamt European Patent Office Office européen des brevets**

(11) **EP 2 557 191 B1**

(12) **EUROPEAN PATENT SPECIFICATION**

(45) Date of publication and mention of the grant of the patent:
**27.07.2016 Bulletin 2016/30**

(51) Int Cl.:
*C22C 38/00* (2006.01)   *B24B 27/06* (2006.01)
*B24D 11/00* (2006.01)   *C21D 8/06* (2006.01)
*C21D 9/52* (2006.01)   *C22C 38/34* (2006.01)
*C22C 38/54* (2006.01)   *H01L 21/304* (2006.01)
*B23D 61/18* (2006.01)

(21) Application number: **11765973.0**

(22) Date of filing: **07.04.2011**

(86) International application number:
**PCT/JP2011/058807**

(87) International publication number:
**WO 2011/126073 (13.10.2011 Gazette 2011/41)**

(54) **WIRE MATERIAL FOR SAW WIRE AND METHOD FOR PRODUCING SAME**

DRAHTMATERIAL FÜR EINEN SÄGEDRAHT UND HERSTELLUNGSVERFAHREN DAFÜR

MATÉRIAU DE FIL POUR FIL DE SCIE ET PROCÉDÉ DE FABRICATION DE CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2010 JP 2010089591**
**08.04.2010 JP 2010089590**

(43) Date of publication of application:
**13.02.2013 Bulletin 2013/07**

(73) Proprietor: **Nippon Steel & Sumitomo Metal Corporation**
**Tokyo 100-8071 (JP)**

(72) Inventors:
• **TARUI, Toshimi**
**Tokyo 100-8071 (JP)**
• **NAKAMURA, Kenichi**
**Tokyo 100-8071 (JP)**
• **SAKAMOTO, Masashi**
**Tokyo 100-8071 (JP)**

(74) Representative: **Vossius & Partner Patentanwälte Rechtsanwälte mbB**
**Siebertstrasse 3**
**81675 München (DE)**

(56) References cited:
**EP-A1- 1 528 115**   **WO-A1-2008/044356**
**JP-A- 2002 256 391**   **JP-A- 2005 002 413**
**JP-B2- 2 888 726**   **JP-B2- 7 116 552**

Remarks:
The file contains technical information submitted after the application was filed and not included in this specification

## Description

### TECHNICAL FIELD

The present invention relates to a strand for saw wire used for cutting a metallic material, a ceramic material, a semiconductor material and the like, and a manufacturing method thereof.

### BACKGROUND ART

A saw wire is used for cutting Si single crystal, Si polycrystal, sapphire, SiC single crystal and the like. Further, a piano strand for saw wire, a steel strand for saw wire and the like have been proposed (Patent Literatures 1 and 2). The saw wire is required to have a small wire diameter and high strength.

Further, a strand for steel cord used for reinforcing a tire, a belt and the like is also required to have a small wire diameter and high strength, similar to the saw wire. Further, various strands for steel cords have been proposed (Patent Literatures 3 to 9).

As saw wires, there have been known a free-abrasive saw wire and a fixed-abrasive saw wire. The fixed-abrasive saw wire is formed such that an abrasive such as diamond is fixed on a strand for saw wire by Ni-electrodeposition. The fixed-abrasive saw wire is used for cutting sapphire used as a substrate for a light-emitting diode (LED) and the like, SiC single crystal and the like used for a semiconductor member and the like. Sapphire and SiC single crystal are more expensive than Si single crystal. For this reason, when cutting out a substrate from ingots of sapphire and SiC single crystal, it is important to reduce a cutting cost. Therefore, it has been required to further reduce a wire diameter of a strand for fixed-abrasive saw wire. Under the present situation, as a strand for fixed-abrasive saw wire, one having a wire diameter of about 0.18 mm, which is smaller than the wire diameter of the steel cord, has been mainly used.

However, when cutting of a material to be cut is performed by using a saw wire with a small wire diameter, the saw wire is likely to be broken during the cutting. When the saw wire is broken during the cutting, the cutting has to be stopped at that point, which results in reducing the yield. Therefore, the more expensive the material to be cut, the higher the necessity for suppressing the breakage of the saw wire.

### CITATION LIST

### PATENT LITERATURE

EP 1 528 115 discloses a very thin, high carbon steel wire superior in ductility, comprising, in mass %: 0.90-1.20% of C; 0.05-1.2% of Si; 0.2-1.0% of Mn; and 0.0050% or less of N, with the balance being iron and impurities, said steel wire having a wire diameter of 0.05-0.50 mm, wherein said steel wire has an exothermic peak in a temperature range of 60°C to 130°C in a differential scanning thermal analysis curve thereof and a maximum height of said exothermic peak relative to a reference line joining the point of 60°C and the point of 130°C in said differential scanning thermal analysis curve is 5 $\mu$W/mg or more.

Furthermore, EP 1 528 115 discloses a method of producing a very thin, high carbon steel wire as described above, comprising the steps of: subjecting a steel wire rod comprising, in mass %, 0.90-1.20% of C, 0.05-1.2% of Si, 0.2-1.0% of Mn, and 0.0050% or less of N, with the balance being iron and impurities, to a patenting treatment in a wire diameter range of 0.50 to 2.0 mm to afford a pearlite structure; subjecting the patented wire rod to a surface-layer lubricant coating treatment; and subjecting the wire rod coated with the surface-layer lubricant, to a continuous wet lubrication wire drawing with use of dies arranged in multiple stages to afford a very thin steel wire having a diameter in the range of 0.05 to 0.50 mm, wherein the reduction of area of each of the dies is 20% or less, the product, $Di^2 \times v$, of the square of the diameter Di (mm) of each of the dies and a wire passing rate (m/min) on a die outlet side is 20 ($mm^2 \times$ m)/min or less, a lubricant liquid temperature is in the range of 0° to 25°C, and a skin pass wire drawing of 10% or less in terms of the reduction of area is performed after wire drawing in at least three stages of dies including a final wire drawing die and a die located upstream of the final drawing die.

Patent Literature 1: Japanese Laid-open Patent Publication No. 10-309627
Patent Literature 2: Japanese Laid-open Patent Publication No. 2002-212676
Patent Literature 3: Japanese Laid-open Patent Publication No. 2003-334606
Patent Literature 4: Japanese Laid-open Patent Publication No. 08-291369
Patent Literature 5: Japanese Laid-open Patent Publication No. 06-293938
Patent Literature 6: Japanese Laid-open Patent Publication No. 11-199980
Patent Literature 7: Japanese Laid-open Patent Publication No. 2009-280836

Patent Literature 8: Japanese Laid-open Patent Publication No. 11-323496
Patent Literature 9: Japanese Laid-open Patent Publication No. 11-2.69607

## SUMMARY OF INVENTION

### TECHNICAL PROBLEM

The present invention has an object to provide a strand for saw wire capable of suppressing a wire breakage at a time of cutting a material to be cut, and a manufacturing method thereof.

### SOLUTION TO PROBLEM

As a result of conducting earnest studies on the cause of the occurrence of wire breakage, the present inventors found out that a twisting of saw wire occurs at a time of cutting a material to be cut, and the twisting is a main cause of the wire breakage.

Further, the present inventors found out that a twist number at which the breakage occurs in a twist test in which a predetermined tension is applied is important, for suppressing such a wire breakage. Conventionally, a reduction of area and a fracture elongation in a tensile test, a twist number in a twist test, and the like have been used as indexes for ductility of wire. However, it is difficult to evaluate a breakage resistance based on these indexes.

Further, the present inventors also found out that, in order to improve the breakage resistance, suppression of generation of structures other than wire-drawn pearlite (ferrite, bainite), and suppression of wire drawing strain are important. Note that it is assumed that the reason why the breakage resistance is improved by suppressing the wire drawing strain is that a variation in a cementite-cementite spacing (lamellar spacing) of pearlite is suppressed. Here, the wire-drawn pearlite is a structure which is formed by deforming a structure of pearlite through wire drawing. Therefore, in the wire-drawn pearlite, ferrite and cementite are elongated in a wire drawing direction due to an influence of the wire drawing, and the ferrite and cementite are laminated in a direction substantially perpendicular to the wire drawing direction.

Further, the present inventors also found out that, in order to manufacture a strand for saw wire with high strength while suppressing the wire drawing strain, it is important that respective contents of C, Si, Mn and Cr satisfy a certain relation.

The present invention was made based on these findings. The present invention is defined by the appended claims.

### ADVANTAGEOUS EFFECTS OF INVENTION

According to the present invention, it is possible to realize both of high strength and high breakage resistance. Therefore, when a saw wire is formed by using the strand for saw wire, it is possible to suppress a breakage at a time of cutting a material to be cut while reducing a cutting cost.

### BRIEF DESCRIPTION OF DRAWINGS

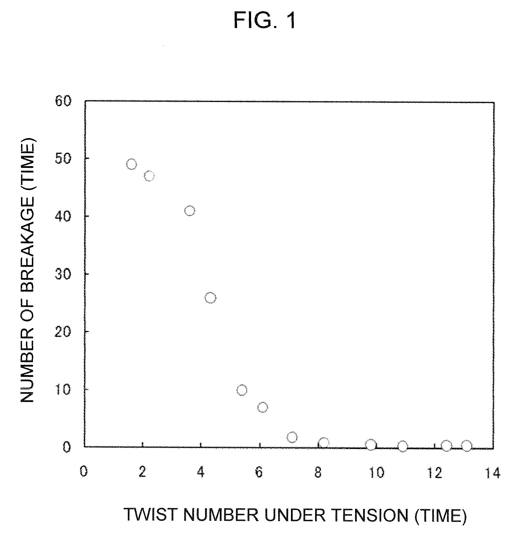

Fig. 1 is a diagram illustrating a relation between a twist number under tension and a number of breakage.

### DESCRIPTION OF EMBODIMENTS

The present inventor conducted detailed analysis regarding a relation between a breakage of saw wire that occurs during cutting a material to be cut such as sapphire and SiC single crystal, and ductility of strand for saw wire. As a result, it was clarified that based on the conventional indexes such as the reduction of area and the fracture elongation in the tensile test, the twist number in the twist test, and the like, the breakage resistance of the strand for saw wire cannot be sufficiently evaluated. Conventionally, in the twist test, both ends of a test piece are firmly gripped with a distance equal to 100 times a wire diameter therebetween, and while making the wire to be tightened to a level where it is not bent, one gripped portion is rotated in a certain direction, and a twist number when the wire is broken is measured.

Therefore, the present inventors studied about new indexes for evaluating the breakage resistance of the strand for saw wire. As a result, they found out that a twist number at which a breakage occurs in a twist test in which a certain tension is applied (twist number under tension) is important. For example, a twist number in a twist test in which a grip-to-grip distance is set to 100 mm, and a tension equal to "a tensile strength of wire" $\times$ "a cross-sectional area of wire" $\times$ 0.5 is applied, is important. In a conventional twist test, when a diameter of a wire is 0.3 mm, a grip-to-grip distance is 30 mm, and a tension applied to the wire is about a tension equal to "a tensile strength of wire" $\times$ "a cross-sectional

area of wire" × 0.1, at the maximum. Therefore, in the twist test in which the grip-to-grip distance is set to 100 mm, and the tension equal to "a tensile strength of wire" × "the cross-sectional area of wire" × 0.5 is applied, the grip-to-grip distance is longer and the tension to be applied is larger than the conventional twist test.

Since the twist number in the twist test in which the certain tension is applied is important, good or poor of the breakage resistance is conceivable to be largely influenced by a curvature of a portion at which the breakage of the strand for saw wire occurs, and the tension which is applied to the strand for saw wire.

Further, it was clarified that tensile strength and elongation when a strand for saw wire is gripped in a state where twisting is applied several times without applying a tension thereto and is subjected to a tensile test in that state, are also effective indexes for evaluating the breakage resistance.

Further, it was clarified that as such indexes, a ratio of a tensile strength in a state of applying 5 times of twisting (tensile strength under twisting) with respect to a tensile strength in a state of applying no twisting (tensile strength ratio under twisting), and a fracture elongation in a state of applying 5 times of twisting (tensile elongation under twisting) are particularly effective. It is conceivable that the reason why these indexes are effective is that, during cutting a material to be cut, a saw wire is twisted and then a tension is applied thereto. Here, the tensile strength in a state of applying no twisting is a tensile strength obtained through a normal tensile test.

Further, the present inventors conducted various analyses regarding a relation between the twist number under tension, the tensile strength ratio under twisting and the tensile elongation under twisting, and a structural type, a residual stress and a hardness distribution in a cross section perpendicular to a wire drawing direction of the strand for saw wire. As a result, it was clarified that fractions (ratios) of structures other than pearlite (wire-drawn pearlite) (non-pearlite structures) such as grain boundary ferrite and bainite, a difference in hardness between a surface portion and a center portion, and a residual stress of the surface portion exert influences on the twist number under tension, the tensile strength ratio under twisting and the tensile elongation under twisting. Further, it was also clarified that the breakage resistance is influenced by a variation in a cementite spacing (lamellar spacing) and a thickness of cementite in pearlite.

Specifically, the present inventors found out that, for suppressing the breakage of the strand for saw wire, the suppression of generation of the non-pearlite structures, the reduction in the difference in the hardness between the surface portion and the center portion, and the application of compressive residual stress to the surface portion, are also effective. Further, the finding such that, qualitatively, the reduction in the variation in the lamellar spacing and the reduction in the thickness of cementite are effective for improving the breakage resistance, was also obtained. Note that the grain boundary ferrite is different from ferrite that forms layers with cementite (lamellar ferrite), and is ferrite generated in a grain boundary of prior austenite and then deformed through wire drawing.

The non-pearlite structures such as the grain boundary ferrite and bainite cause intensive localized strain. Accordingly, for improving the breakage resistance of the strand for saw wire, it is particularly effective to reduce the fractions of the non-pearlite structures. The grain boundary ferrite and bainite are generated during cooling a hot-rolled wire rod. Therefore, for example, by increasing a cooling rate after the hot rolling, it is possible to suppress the generation of non-pearlite structures, and to increase a fraction of pearlite structure of the hot-rolled wire rod.

Further, in the pearlite structure, a portion with a large lamellar spacing has a lower strength, and the strain is likely to intensively occur on that portion. For this reason, when the lamellar spacing is non-uniform, the breakage is likely to occur in the portion with a large lamellar spacing. Therefore, it is further preferable to reduce the variation in the lamellar spacing. Since there is a tendency that the variation in the lamellar spacing is larger as the wire drawing strain is increased, the breakage resistance is conceivable to be improved by suppressing the wire drawing strain.

Further, the present inventors studied about conditions for manufacturing a strand for saw wire with a large twist number under tension, high tensile strength ratio under twisting and tensile elongation under twisting, and having a tensile strength of 4000 MPa or more. When manufacturing a strand for saw wire, for example, a hot-rolled wire rod of high carbon steel is subjected to primary wire drawing to have a predetermined wire diameter, and thereafter, final patenting treatment, brass plating treatment, finish wire drawing and the like are performed. Further, depending on a diameter of a strand for saw wire to be manufactured, intermediate heat treatment and intermediate wire drawing (secondary wire drawing) are performed in accordance with need, after the primary wire drawing and before the final patenting treatment process. Specifically, processing similar to that for a strand for steel cord is performed. Here, the patenting treatment is heat treatment in which a structure of a primary wire-drawn material is turned into austenite by keeping the primary wire-drawn material heated, and thereafter, the material is quickly cooled to a pearlite transformation temperature and is kept in this state so that the structure is isothermally transformed to pearlite.

In order to strengthen the strand for saw wire, it is preferable to increase the wire drawing strain. On the other hand, when the wire drawing strain (true strain) is increased, the breakage resistance is reduced due to the variation in the lamellar spacing, as described above. As a result, the twist number under tension, the tensile strength ratio under twisting and the tensile elongation under twisting tend to decrease. Namely, the realization of high strength and the improvement in the breakage resistance are in a tradeoff relation. Therefore, if the wire drawing strain is reduced for the purpose of improving the breakage resistance, it is difficult to secure the strength of 4000 MPa or more. In order to secure the strength of 4300 MPa or more, in particular, it is important to set the wire drawing strain to 4.5 or more, but it was clarified that there is a tendency that, if the wire drawing strain is set to 4.5 or more, the variation in the lamellar spacing becomes large, resulting in that the breakage resistance is likely to be decreased.

Therefore, in order to realize the suppression of the wire drawing strain, the present inventors repeatedly conducted earnest studies regarding a balance of contents of elements that contribute to the improvement in the strength of the strand for saw wire. As a result, they found out that, regarding the respective contents of C, Si, Mn and Cr, when a value of parameter P represented by the following (equation 1) is 1000 or more, the strength of 4000 MPa or more can be obtained even if the wire drawing strain is suppressed, and when the value is 1050 or more, the strength of more than 4300 MPa can be obtained.

$$P = 1098 \times [C] + 98 \times [Si] - 20 \times [Mn] + 167 \times [Cr] \quad \dots \quad (equation\ 1)$$

Here, [C], [Si], [Mn] and [Cr] indicate contents (mass%) of C, Si, Mn and Cr, respectively.

Further, the present inventors found out that when manufacturing a strand for saw wire, chemical components and a cooling rate after hot rolling exert influences on a thickness of cementite of a hot-rolled wire rod and a thickness of cementite after patenting treatment. Specifically, if the cooling rate after the hot rolling is set to 10°C/second or more when the value of the parameter P is 1000 or more, it is possible to obtain a hot-rolled wire rod having a structure containing 97% or more of pearlite in which a thickness of cementite is 0.03 μm or less. Further, they also found out that if the cooling rate after the hot rolling is set to 10°C/second or more when the value of the parameter P is 1050 or more, it is possible to obtain a hot-rolled wire rod having a structure containing 98% or more of pearlite in which a thickness of cementite is 0.03 μm or less.

Further, it was also clarified that if the hot-rolled wire rod is subjected to primary wire drawing, subjected to intermediate heat treatment and intermediate wire drawing (secondary wire drawing) according to need, and is subjected to final patenting treatment, when the value of the parameter P is 1000 or more, it is possible to obtain a patenting material having a structure containing 98% or more of pearlite in which a thickness of cementite is 0.02 μm or less, and when the value of the parameter P is 1050 or more, it is possible to obtain a patenting material having a structure containing 99% or more of pearlite in which a thickness of cementite is 0.02 μm or less. Further, it was clarified that the twist number under tension, the tensile strength ratio under twisting and the tensile elongation under twisting of a strand for saw wire obtained from such patenting materials are remarkably improved.

Next, explanation will be made on a composition of the strand for saw wire.

A wire for fixed-abrasive saw wire according to an embodiment of the present invention contains, in mass%, C: 0.87% to 1.2%, Si: 0.02 to 2.0%, Mn: 0.1 to 1.0%, and Cr: 0.5% or less. Regarding contents of C, Si, Mn and Cr, a value of parameter P represented by the above-described (equation 1) is 1000 or more. Further, a P content is 0.015% or less, an S content is 1.0%, or less, and an N content is 0.01% or less. Further, a balance is composed of Fe and inevitable impurities.

C: C increases a tensile strength after patenting treatment and improves a hardening rate during wire drawing, resulting in that the tensile strength can be increased with a small wire drawing strain. When a content of C is less than 1.0%, it becomes difficult to secure the strength of 4000 MPa or more with a small wire drawing strain, and when the content of C is less than 0.92%, it becomes difficult to secure the strength of more than 4300 MPa. On the other hand, when the content of C exceeds 1.0%, a breakage resistance is reduced, and further, proeutectoid cementite precipitates to an austenite grain boundary to deteriorate wire drawability. Therefore, the content of C is set to 0.87% to 1.2%. Further, in order to secure the strength of more than 4300 MPa, the content of C may be set to 0.92% to 1.2%.

Si: Si strengthens ferrite in pearlite to improve the tensile strength, and also exhibits deoxidation function. When a content of Si is less than 0.02%, the above effect is insufficient. On the other hand, when the content of Si exceeds 1.0%, a hard SiO$_2$-based inclusion, which lowers wire drawability, is easily generated, and further, ferrite and bainite being non-pearlite structures increase in a hot-rolled wire rod. Therefore, the content of Si is set to 0.02% to 2.0%.

Mn: Mn exhibits functions of deoxidation and desulfurization, and increases hardenability to improve the tensile strength after the patenting treatment. When a content of Mn is less than 0.1%, the above effect is insufficient. On the other hand, when the content of Mn exceeds 1.0%, bainite is easily generated in the hot-rolled wire rod, and further, a treatment time for completing the pearlite transformation during the patenting treatment is lengthened, which results in reducing productivity. Therefore, the content of Mn is set to 0.01% to 1.0%.

Cr: Cr is a useful element that contributes to refining of a cementite spacing (lamellar spacing) in pearlite after performing the hot rolling and after patenting treatment. In order to increase the tensile strength after the patenting treatment and to improve a hardening rate during wire drawing, 0.01% or more of Cr is preferably contained. Further, in order to increase the strength and to improve the breakage resistance, a content of Cr is more preferably 0.01% or more, and is still more preferably 0.01% or more. On the other hand, when the content of Cr exceeds 0.5%, bainite is easily generated in the hot-rolled wire rod, and further, a treatment time for completing the pearlite transformation in the patenting treatment becomes long, which results in reducing productivity. Therefore, the content of Cr is set to 0.5% or less.

Further, in the present embodiment, it is important that the value of the parameter P represented by the above-described (equation 1) is 1000 or more, and the value is preferably 1050 or more. When the value of the parameter P is less than 1000, it is difficult to reduce fractions of the non-pearlite structures and to reduce a thickness of cementite, resulting in that the improvement in the breakage resistance is difficult to be achieved. Further, since the strength of patenting material is insufficient, it is difficult to secure the tensile strength of 4000 MPa or more if the wire drawing strain is suppressed to be small for improving the breakage resistance. As above, when the value of the parameter P is less than 1000, it is difficult to reduce the variation in the lamellar spacing to improve the breakage resistance while securing the strength. Further, when the value of the parameter P is less than 1050, if the wire drawing strain is suppressed to less than 4.5, it is difficult to secure the tensile strength of more than 4300 MPa. Note that since the ranges of the contents of C, Si, Mn and Cr are set, the parameter P takes a value of 1595.1 or less.

P: P reduces wire drawability and ductility. Therefore, a content of P is set to 0.01% or less.
S: S reduces wire drawability and ductility. Therefore, a content of S is set to 0.015% or less.
N: N reduces ductility. Therefore, a content of N is set to 0.01% or less.

Further, the strand for saw wire according to the present embodiment may also contain at least one kind selected from the group consisting of Ni: 1.0% or less, Cu: 0.5% or less, Mo: 0.5% or less, V: 0.5% or less, and B: 0.0050% or less.

Ni: Ni acts to impart good wire drawability to pearlite generated through the transformation during the patenting treatment. However, even when a content of Ni exceeds 1.0%, the effect comparable to the content is not obtained. Therefore, the content of Ni is preferably set to 0.01% or less. Further, when the content of Ni is less than 0.05%, the above effect is difficult to be obtained. Therefore, the content of Ni is preferably set to 0.01% or more.
Cu: Cu is an element that contributes to high strengthening owing to its precipitation hardening. However, even when a content of Cu exceeds 0.5%, the effect comparable to the content is not obtained. Therefore, the content of Cu is preferably set to 0.5% or less. Further, when the content of Cu is less than 0.01%, the above effect is difficult to be obtained. Therefore, the content of Cu is preferably set to 0.01% or more.
Mo: Mo has effects of refining the lamellar spacing in pearlite and increasing the tensile strength after the patenting treatment. However, when a content of Mo exceeds 0.5%, the effect comparable to the content is not obtained. Further, the pearlite transformation is delayed, resulting in that a treatment time is lengthened and productivity is lowered. Therefore, the content of Mo is preferably set to 0.5% or less. Further, when the content of Mo is less than 0.05%, the above effect is difficult to be obtained. Therefore, the content of Mo is preferably set to 0.01% or more.
V: V has effects of refining the lamellar spacing in pearlite and increasing the tensile strength after the patenting treatment. However, even when a content of V exceeds 0.5%, the effect comparable to the content is not obtained. Therefore, the content of V is preferably set to 0.01% or less. Further, when the content of V is less than 0.05%, the above effect is difficult to be obtained. Therefore, the content of V is preferably set to 0.05% or more.
B: B has an effect of suppressing the generation of ferrite. However, when a content of B exceeds 0.0050%, wire drawability is low. Therefore, the content of B is preferably set to 0.0050% or less. Further, when the content of B is less than 0.0001%, the above effect is difficult to be obtained. Therefore, the content of B is preferably set to 0.0001% or more.

Note that although Nb, Ti and Al may also be contained, it is preferable that a Nb content is 0.01% or less, a Ti content is 0.01% or less, and an Al content is 0.01% or less. When the Nb content exceeds 0.01%, a generation amount of carbonitride of Nb is increased, and the carbonitride is likely to be coarse. For this reason, a frequency of breakage of the saw wire is sometimes increased. When the Ti content exceeds 0.01%, a frequency of breakage of the saw wire is sometimes increased, due to the similar reason to that of Nb. When the Al content exceeds 0.005%, an oxide of Al increases, resulting in that the frequencies of the breakage during the wire drawing and the breakage of the saw wire are likely to increase. Based on these reasons, it is preferable that the Nb content is 0.01% or less, the Ti content is 0.01% or less, and the Al content is 0.005% or less.

Next, explanation will be made on a structure of the strand for saw wire according to the embodiment of the present invention. Note that micro-voids are not generated in the structure of the strand for saw wire according to the present embodiment.

In the strand for saw wire according to the present embodiment, a metallic structure contains a wire-drawn pearlite structure in an area ratio of 0.01% or more. When the area ratio of the wire-drawn pearlite structure is less than 98%, even if the variation in the lamellar spacing falls within a predetermined range, it is difficult to obtain a favorable twist number under tension, resulting in that the realization of both of the high strength and the breakage resistance is difficult. In order to obtain the tensile strength of 4300 MPa or more, the area ratio of the wire-drawn pearlite structure is preferably 99% or more.

Further, in order to improve the breakage resistance, it is preferable that the variation in the lamellar spacing in the wire-drawn pearlite structure is as small as possible. The level of the variation is not particularly limited, but, for example, it is preferable to reduce a ratio between a maximum value and a minimum value of the lamellar spacing in a cross section perpendicular to a wire drawing direction, and it is particularly preferable to set the ratio to 10 or less. In order to suppress the variation in the lamellar spacing, it is preferable to reduce the wire drawing strain.

A diameter of the strand for saw wire according to the present embodiment is 0.05 mm to 0.18 mm, and is preferably 0.08 mm to 0.16 mm. Since the diameter is very small as described above, it is possible to reduce a cutting cost of a material to be cut. Specifically, it is possible to enhance utilization efficiency of the material to be cut. Thus, the strand for saw wire may be favorably used for thinly cutting an expensive material such as sapphire and SiC single crystal, and the like. When the wire diameter is less than 0.05 mm, the tensile strength and the breakage resistance sometimes are insufficient. Further, when the wire diameter exceeds 0.18 mm, the cutting cost at the time of cutting increases, which results in reducing the utilization efficiency of the material to be cut.

As described above, the strand for saw wire according to the present embodiment is extremely thin, so that a high tensile strength is required. This is because, in order to cut the material to be cut with high accuracy, there is a need to apply a high tension. A tensile strength of the strand for saw wire according to the present embodiment is 4000 MPa or more, and is preferably more than 4300 MPa, so that a high tension may be applied to the strand for saw wire when cutting the material to be cut such as sapphire and SiC single crystal. Note that an upper limit of the tensile strength is not particularly limited, but, it is preferably 5200 MPa or less. When the tensile strength exceeds 5200 MPa, there is a possibility that the breakage resistance is reduced.

Further, in the present embodiment, a difference in Vickers hardness (HV hardness difference) between a surface portion in which a depth from a surface of the wire is within a range of "a wire diameter" × 0.2 or less and a center portion in which a distance from a center of the wire is within a range of "the wire diameter" × 0.2 or less, is preferably 100 or less. When the HV hardness difference is 100 or less, it is possible to obtain further excellent ductility and twist characteristics. Further, the HV hardness difference is more preferably 50 or less. In order to reduce the HV hardness difference, it is effective to increase the strength through the adjustment of components contained in the strand for saw wire, and it is particularly important that the value of the parameter P is 1000 or more.

Further, in order to reduce the HV hardness difference, it is important to suppress heat generation during processing in finish wire drawing. Further, in order to suppress the heat generation during processing, for example, technologies of reducing a wire drawing speed, using a diamond die, adjusting a shape of die such as a die angle, controlling a reduction of area in a final die to 10% or less, using a lubricant with a friction coefficient of 0.1 or less, controlling a temperature of the lubricant to 70°C or less and the like, are effective. Further, it is possible to reduce the HV hardness difference also by performing straightening process after the finish wire drawing. By appropriately combining these technologies, it becomes possible to reduce the HV hardness difference more securely and easily.

When cutting an ingot with using a saw wire including the strand for saw wire according to the present embodiment, which is, for example, a fixed-abrasive saw wire or a free-abrasive saw wire, a tension is applied to the strand for saw wire. Accordingly, for suppressing the wire breakage, it is preferable that a compressive residual stress is applied to the surface portion of the strand for saw wire. For instance, the residual stress in the surface portion is preferably -100 MPa or less. A sign of residual stress is given based on a tensile direction which is set as positive, so that when the residual stress is -100 MPa or less, it means that the compressive residual stress is 100 MPa or more. When the residual stress of the surface portion of the wire is -100 MPa or less, it is possible to obtain further excellent breakage resistance. Here, the surface portion corresponds to a portion in which, for example, a depth from a surface of the strand for saw wire falls within a range of "a wire diameter" × 0.2 or less.

In order to make the residual stress of the surface portion to be the compressive residual stress, the adjustment of components contained in the strand for saw wire is effective, and it is particularly important that the value of the parameter P is 1000 or more. Further, it is possible to apply the residual stress of -100 MPa or less to the surface portion, also by controlling the reduction of area in the final die to 10% or less or by performing the straightening process or shot peening treatment after the finish wire drawing.

As described above, the twist number in the twist test in which the grip-to-grip distance is set to 100 mm, and the tension equal to "the tensile strength of wire" × "the cross-sectional area of wire" × 0.5 is applied (twist number under tension), is quite effective as an index for the breakage resistance of the strand for saw wire. Fig. 1 illustrates an example of a relation between the twist number under tension and the number of wire breakage of a fixed-abrasive saw wire during cutting sapphire. The number of wire breakage on a vertical axis indicates the number of wire breakage per 1000 km of the fixed-abrasive saw wire length. As is apparent from Fig. 1, when the twist number under tension is less than 5, the number of wire breakage is significantly large, and when the twist number under tension is 5 or more, the number of wire breakage is extremely small. Therefore, the twist number under tension is set to 5 or more. Further, as illustrated in Fig. 1, when the twist number under tension is 8 or more, the number of wire breakage is further reduced, so that the twist number under tension is preferably 8 or more. When the twist number under tension is 8 or more, further excellent breakage resistance can be obtained.

Further, in the strand for saw wire according to the present embodiment, the ratio of the tensile strength under twisting with respect to the tensile strength in a state of applying no twisting (tensile strength ratio under twisting), is preferably 85% or more. Further, the tensile elongation under twisting is preferably 2% or more. As described above, the tensile strength under twisting and the tensile elongation under twisting are the tensile strength and the fracture elongation when the tensile test is performed in a state of applying 5 times of twisting to the wire. The tensile strength ratio under twisting and the tensile elongation under twisting are suitable as indexes for the breakage resistance of a saw wire including the strand for saw wire. In order to further reduce the frequency of wire breakage, the tensile strength ratio under twisting is more preferably 90% or more.

Note that when measuring the tensile strength under twisting and the tensile elongation under twisting, both ends of a test piece may be gripped in a state where a grip-to-grip distance is set to 100 mm and twisting may be applied 5 times without applying a tension, and the test piece may be subjected to a tensile test in that state, for example.

The variation in the lamellar spacing and the non-pearlite structures are conceivable as a cause of deterioration of the tensile strength and elongation during conducting the tensile test in a state of applying 5 times of twisting. Therefore, in order to enhance the tensile strength ratio under twisting and the tensile elongation under twisting, it is preferable to realize the reduction in the variation in the lamellar spacing and the reduction in the non-pearlite structures.

Next, explanation will be made on a manufacturing method of the strand for saw wire according to the present embodiment.

When manufacturing the strand for saw wire according to the present embodiment, first, a steel billet having the aforementioned chemical components is subjected to hot rolling and is then cooled to obtain a hot-rolled wire rod. Subsequently, primary wire drawing of the hot-rolled wire rod is performed to obtain a primary wire-drawn material. After that, final patenting treatment is performed on the primary wire-drawn material to obtain a patenting material. Subsequently, finish wire drawing of the patenting material is performed.

Note that depending on a diameter of a strand for saw wire to be manufactured, it is sometimes difficult to obtain a predetermined diameter only by the primary wire drawing. In such a case, it is also possible to perform intermediate heat treatment and intermediate wire drawing (secondary wire drawing) between the primary wire drawing and the final patenting treatment.

Further, it is also possible to perform plating treatment on the patenting material between the final patenting treatment and the finish wire drawing. In this case, the finish wire drawing may be performed on the patenting material which has been subjected to the plating treatment.

In the present embodiment, a diameter of the hot-rolled wire rod is set to 6 mm or less. When the diameter of the hot-rolled wire rod exceeds 6 mm, it is difficult to obtain a predetermined diameter only by the primary wire drawing, and there arises a necessity for increasing the number of the aforementioned intermediate wire drawing and intermediate heat treatment to obtain the predetermined diameter, which results in reducing productivity. Further, when the number of the intermediate wire drawing and the intermediate heat treatment is increased, a surface appearance of the patenting material becomes rough, resulting in that, conclusively, the twist number under tension, the tensile strength ratio under twisting, and the tensile elongation under twisting of the strand for saw wire are reduced. Note that in order to further reduce the number of the intermediate wire drawing and the intermediate heat treatment, the diameter of the hot-rolled wire rod is preferably set to 5 mm or less. Further, the diameter of the hot-rolled wire rod is preferably set to 3 mm or more. This is because, when the diameter of the hot-rolled wire rod is set to less than 3 mm, productivity of the wire rod at the time of the hot rolling is reduced.

A temperature condition in the hot rolling is not particularly limited, but, a temperature at which finish rolling is performed (finishing temperature) is preferably set to 850°C or more. When the finishing temperature is less than 850°C, there is a possibility that a large amount of grain boundary ferrite is generated during cooling after the hot rolling, and the hot-rolled wire rod having a structure containing a predetermined amount of pearlite is difficult to be obtained.

In the present embodiment, a cooling rate after the hot rolling is set to 10°C/second or more. As described above, if the cooling rate after the hot rolling is set to 10°C/second or more when the value of the parameter P is 1000 or more, it is possible to obtain a hot-rolled wire rod having a structure containing 97% or more of pearlite in which a thickness of cementite is 0.03 μm or less. Further, if the cooling rate after the hot rolling is set to 10°C/second or more when the value of the parameter P is 1050 or more, it is possible to obtain a hot-rolled wire rod having a structure containing 98% or more of pearlite in which a thickness of cementite is 0.03 μm or less. The cooling rate may be controlled through air blasting, for example. Further, it is also possible to control the cooling rate based on a wire diameter after the hot rolling. In order to suppress the generation of non-pearlite structure, which is bainite in particular, it is particularly preferable to control the cooling rate within a temperature range from the finishing temperature to 520°C to 650°C, at which the pearlite transformation is started. Further, it is also possible to perform the patenting treatment by quickly immersing the wire rod after the hot rolling in a molten salt bath of 520°C to 580°C. In this case, the cooling rate in the molten salt is 150°C/second or more.

When the fraction of pearlite is less than 97%, micro-voids are generated in a non-pearlite portion, which results in reducing the twist number under tension, the tensile strength ratio under twisting, and the tensile elongation under twisting of the strand for saw wire. Further, when a thickness of cementite contained in pearlite exceeds 0.03 $\mu$m, minute micro-voids are generated in the vicinity of cementite during the primary wire drawing, which reduces ductility of the strand for saw wire. Therefore, the structure of the hot-tolled wire rod is made to contain 97% or more, preferably 98% or more of pearlite in which a thickness of cementite is 0.03 $\mu$m or less.

As described above, the patenting treatment is the heat treatment in which a structure of a primary wire-drawn material is turned into austenite by keeping the primary wire-drawn material heated, and thereafter, the material is quickly cooled to a pearlite transformation temperature and is kept in this state so that the structure is isothermally transformed to pearlite. If such patenting treatment is performed after the primary wire drawing, when the value of the parameter P is 1000 or more, it is possible to obtain a patenting material having a structure containing 98% or more of pearlite in which a thickness of cementite is 0.02 $\mu$m or less, and when the value of the parameter P is 1050 or more, it is possible to obtain a patenting material having a structure containing 99% or more of pearlite in which a thickness of cementite is 0.02 $\mu$m or less, as described above.

In the patenting treatment, the temperature for keeping the primary wire-drawn material heated to turn the structure into austenite is preferably set to 950°C to 1100°C, and the temperature for keeping the primary wire-drawn material cooled to make the structure to be isothermally transformed to pearlite (to cause pearlite transformation) is preferably set to 520°C to 600°C. Further, the temperature for making the structure to be isothermally transformed to pearlite is more preferably 550°C or more and/or 580°C or less. A bath used for causing the pearlite transformation is not particularly limited, but, a Pb bath and a fluidized bed furnace are preferable.

The fraction of pearlite in the structure of the patenting material after the final patenting treatment is set to 98% or more, and is preferably set to 99% or more, in order to obtain sufficient twist number under tension, tensile strength ratio under twisting and tensile elongation under twisting of the strand for saw wire. When the fraction of pearlite is less than 1.0%, there is a case where, during the finish wire drawing, micro-voids are generated from ferrite and bainite being the non-pearlite structures as starting points, which causes wire breakage. Further, when the non-pearlite structures increase, the twist number under tension, the tensile strength ratio under twisting and the tensile elongation under twisting of the strand for saw wire sometimes are insufficient.

Further, when a thickness of cementite contained in pearlite of the patenting material exceeds 0.02 $\mu$m, minute micro-voids are generated in the vicinity of cementite during the finish wire drawing, which reduces the twist number under tension, the tensile strength ratio under twisting and the tensile elongation under twisting of the strand for saw wire. Therefore, the structure of the hot-rolled wire rod is made to contain 98% or more, preferably 99% or more of pearlite in which a thickness of cementite is 0.02 $\mu$m or less.

In order to make a thickness of cementite after the final patenting treatment to be 0.02 $\mu$m or less, it is important to set, regarding the composition of the steel billet, the value of the parameter P to 1000 or more, preferably 1050 or more, and then to set the temperature for making the structure to be isothermally transformed to pearlite to 520°C to 600°C.

In the present embodiment, a diameter after the finish wire drawing is set to 0.05 mm to 0.18 mm. This is for the reduction in the cutting cost of a saw wire using the strand for saw wire, and the like.

The present inventors conducted studies regarding a relation between the tensile strength and the breakage resistance of the strand for saw wire, and the C content and the wire drawing strain in the finish wire drawing (true strain in wire drawing). As a result, they found out that, regarding a wire drawing strain $\varepsilon$ in the finish wire drawing, when a value of parameter Q represented by the following (equation 2) is 380 or more, excellent tensile strength and breakage resistance can be obtained.

$$Q = 99 \times [C] + 2.7 \times \exp(\varepsilon/2) / (0.075 - 0.0112 \times [C]) \quad \ldots \quad (\text{equation } 2)$$

Here, [C] indicates the C content (mass%).

When the value of the parameter Q is less than 380, it is difficult to secure the tensile strength of 4000 MPa or more. In order to secure the tensile strength of more than 4300 MPa, it is preferable that the value of the parameter Q exceeds 440. Further, as described above, when the wire drawing strain $\varepsilon$ is 4.5 or more, the variation in the lamellar spacing is large, resulting in that the twist number under tension, the tensile strength ratio under twisting and the tensile elongation under twisting are reduced, and the breakage resistance is likely to be reduced. Therefore, the wire drawing strain $\varepsilon$ is set to less than 4.5. Note that since the ranges of the content of C and the wire drawing strain are set, the value of the parameter Q becomes 535 or less. Further, when the value of the parameter Q exceeds 535, the breakage resistance of the strand for saw wire is likely to be reduced.

Although a method for the finish wire drawing is not particularly limited, it is preferable to perform the finish wire drawing with using a diamond die at a predetermined wire drawing speed. Processing conditions such as a shape of die such as a die angle, as well as a reduction of area in a final die, a type of lubricant and the like are not particularly limited, but, they are preferably selected so that a difference in Vickers hardness (HV hardness difference) between a surface portion in which a depth from a surface of the strand for saw wire is within a range of "a wire diameters × 0.2 or less and a center portion in which a distance from a center of the wire is within a range of "the wire diameter" × 0.2 or less, is 100 or less, as described above. This is for obtaining excellent ductility and twist characteristics.

It is also possible to perform, before and/or after the finish wire drawing, Cu-Zn plating, Cu plating and/or Ni plating in accordance with need, thereby forming a plating film on a surface of the wire rod. Further, it is also possible to perform bluing treatment for removing stress after the finish wire drawing. The bluing treatment is preferably performed within a temperature range of 150°C to 400°C.

It is also possible to perform straightening process after the finish wire drawing. In this case, it is possible to further reduce the HV hardness difference between the surface portion and the center portion of the strand for saw wire, and to easily apply a residual stress of -100 MPa or less to the surface portion of the strand for saw wire. It is possible to easily make the residual stress of the surface portion of the strand for saw wire to be -100 MPa or less, also by performing shot peening treatment after the finish wire drawing.

The strand for saw wire according to the present embodiment can be manufactured as above.

The strand for saw wire according to the present embodiment has properties such that the wire diameter is small, the tensile strength is high, and the breakage resistance is excellent. Accordingly, when, in particular, the strand for saw wire is used for a saw wire, it is possible to reduce a cutting cost at a time of cutting an expensive ingot such as sapphire and SiC single crystal, and the like. Further, it is possible to present the wire breakage during a cutting operation. Therefore, industrial contribution is quite remarkable. Note that the strand for saw wire according to the present embodiment is quite suitable for a fixed-abrasive saw wire, but, it is also possible to be used for a free-abrasive saw wire.

EXAMPLE

Next, experiments conducted by the present inventors will be described. Conditions and so on in these experiments are only examples adopted for confirming feasibility and effects of the present invention, and the present invention is not limited to these examples.

(First Experiment)

In a first experiment, first, steel billets having chemical components presented in Table 1 (steels No. 1A to 1W) were subjected to hot rolling, and then cooled at cooling rates presented in Table 2, thereby obtaining hot-rolled wire rods with diameters presented in Table 2 (tests No. 1-1 to No. 1-44). Finish rolling in the hot rolling was conducted within a temperature range of 920°C to 950°C. The cooling rates were controlled through air blasting. Further, by methods described below, a fraction of pearlite structure and a thickness of cementite of each of the hot-rolled wire rods were measured. Results thereof are presented in Table 2.

0.01% In the measurement of the fraction of pearlite structure of each of the hot-rolled wire rods, pictures of 15 visual fields or more were photographed at a magnification of ×2000 with a scanning electron microscope (SEM). Further, an area fraction of pearlite structure in each visual field was measured through image processing, and an average value of the area fractions was set as a fraction of pearlite structure of the hot-rolled wire rod. Note that a location at which observation (photographing) was performed was set to a position apart from a surface of the hot-rolled wire rod by about d/4 (d: diameter of hot-rolled wire rod).

In the measurement of the thickness of cementite of each of the hot-rolled wire rods, a sample for observation under transmission electron microscope (TEM) was taken from an overlapping portion of wire rod of the hot-rolled wire rod, which had been rolled in a coil shape after the hot rolling. Further, visual fields perpendicular to cementite plate were selected, and pictures of 10 visual fields or more were photographed at a magnification of ×10000 to ×20000, with the TEM. Further, a thickness of cementite in each visual field was measured, and an average value of the thicknesses was set as a thickness of cementite of the hot-rolled wire rod. Note that a location at which observation (photographing) was performed was set to a position apart from a surface of the hot-rolled wire rod by about d/4.

[Table 1]

[Table 2]

| STEEL No. | CHEMICAL COMPONENT (MASS%) | | | | | | | | | | | | PARAMETER P | NOTE |
|---|---|---|---|---|---|---|---|---|---|---|---|---|---|---|
| | C | Si | Mn | Cr | P | S | N | Ni | Cu | Mo | V | B | | |
| 1A | 0.89 | 0.14 | 0.32 | 0.18 | 0.007 | 0.011 | 0.0037 | — | — | — | — | — | 1015 | EXAMPLE |
| 1B | 1.12 | 0.26 | 0.36 | 0.22 | 0.009 | 0.004 | 0.0032 | — | — | — | — | 0.0016 | 1285 | |
| 1C | 0.90 | 0.22 | 0.12 | 0.46 | 0.005 | 0.005 | 0.0029 | — | — | — | — | — | 1084 | |
| 1D | 1.05 | 0.35 | 0.40 | 0.10 | 0.005 | 0.006 | 0.0047 | 0.27 | — | — | — | — | 1196 | |
| 1E | 0.94 | 0.29 | 0.36 | 0.21 | 0.009 | 0.005 | 0.0041 | — | — | — | — | — | 1088 | |
| 1F | 0.97 | 0.18 | 0.36 | 0.30 | 0.007 | 0.006 | 0.0025 | — | 0.14 | — | — | — | 1126 | |
| 1G | 0.97 | 1.45 | 0.32 | 0.36 | 0.007 | 0.007 | 0.0031 | — | — | — | — | — | 1261 | |
| 1H | 1.02 | 0.20 | 0.29 | 0.24 | 0.009 | 0.009 | 0.0041 | — | — | — | — | — | 1174 | |
| 1I | 0.99 | 0.18 | 0.44 | 0.18 | 0.004 | 0.007 | 0.0024 | — | — | 0.04 | — | 0.0010 | 1126 | |
| 1J | 1.00 | 0.22 | 0.64 | 0.36 | 0.008 | 0.009 | 0.0042 | 0.15 | 0.10 | — | — | — | 1167 | |
| 1K | 1.18 | 0.18 | 0.30 | 0.19 | 0.007 | 0.008 | 0.0040 | — | — | — | — | — | 1339 | |
| 1L | 0.95 | 0.09 | 0.57 | 0.32 | 0.007 | 0.008 | 0.0020 | — | — | — | 0.19 | — | 1094 | |
| 1M | 0.98 | 0.55 | 0.19 | 0.14 | 0.008 | 0.009 | 0.0036 | — | — | 0.03 | 0.04 | 0.0014 | 1150 | |
| 1N | 0.99 | 0.32 | 0.35 | 0.27 | 0.007 | 0.006 | 0.0024 | 0.08 | — | — | — | 0.0016 | 1156 | |
| 1O | 1.15 | 0.71 | 0.96 | 0.08 | 0.007 | 0.008 | 0.0031 | — | — | — | — | — | 1326 | |
| 1P | 1.09 | 0.17 | 0.41 | 0.04 | 0.006 | 0.009 | 0.0027 | — | — | — | — | 0.0022 | 1212 | |
| 1Q | 0.82 | 0.21 | 0.48 | 0.00 | 0.012 | 0.006 | 0.0038 | — | — | — | — | — | 911 | COMPARATIVE EXAMPLES |
| 1R | 0.80 | 0.19 | 0.46 | 0.15 | 0.008 | 0.010 | 0.0046 | — | — | — | — | — | 913 | |
| 1S | 1.02 | 2.14 | 0.79 | 0.23 | 0.006 | 0.005 | 0.0022 | — | — | — | — | — | 1352 | |
| 1T | 0.93 | 0.22 | 0.53 | 0.00 | 0.007 | 0.007 | 0.0026 | — | — | — | — | — | 1032 | |
| 1U | 1.27 | 0.16 | 0.80 | 0.40 | 0.006 | 0.009 | 0.0042 | — | — | — | — | — | 1461 | |
| 1V | 0.98 | 0.56 | 1.95 | 0.18 | 0.006 | 0.006 | 0.0023 | — | — | — | — | — | 1122 | |
| 1W | 0.92 | 0.20 | 0.46 | 0.82 | 0.006 | 0.009 | 0.0036 | — | — | — | — | — | 1158 | |

n.b.) Underline means that the value is out of the range of the present invention or out of the desirable range.
n.b.) "−" of the selective element means that the element is not added o purpose.

| TEST No. | STEEL No. | HOT-ROLLED WIRE ROD | | | | NOTE |
| | | DIAMETER (mm) | COOLING RATE (°C/SEC) | FRACTION OF PERLITE (%) | THICKNESS OF CEMENTITE (μm) | |
|---|---|---|---|---|---|---|
| 1-1 | 1A | 5.0 | 16 | 98.4 | 0.015 | EXAMPLE |
| 1-2 | 1A | 4.6 | 18 | 98.6 | 0.015 | |
| 1-3 | 1A | 4.2 | 18 | 98.5 | 0.015 | |
| 1-4 | 1B | 4.1 | 19 | 99.2 | 0.020 | |
| 1-5 | 1B | 3.0 | 24 | 99.4 | 0.017 | |
| 1-6 | 1C | 4.5 | 19 | 98.3 | 0.014 | |
| 1-7 | 1C | 4.8 | 20 | 98.3 | 0.014 | |
| 1-8 | 1C | 5.0 | 22 | 98.2 | 0.015 | |
| 1-9 | 1D | 3.9 | 23 | 99.1 | 0.016 | |
| 1-10 | 1D | 4.1 | 21 | 99.2 | 0.017 | |
| 1-11 | 1E | 4.8 | 23 | 98.8 | 0.014 | |
| 1-12 | 1E | 3.9 | 21 | 98.7 | 0.016 | |
| 1-13 | 1F | 5.0 | 17 | 98.9 | 0.016 | |
| 1-14 | 1F | 4.1 | 19 | 98.9 | 0.015 | |
| 1-15 | 1G | 4.3 | 21 | 98.9 | 0.015 | |
| 1-16 | 1G | 3.6 | 23 | 98.8 | 0.014 | |
| 1-17 | 1H | 3.9 | 22 | 98.9 | 0.015 | |
| 1-18 | 1H | 4.5 | 18 | 98.9 | 0.016 | |
| 1-19 | 1I | 4.7 | 19 | 98.7 | 0.017 | |
| 1-20 | 1I | 3.3 | 22 | 98.6 | 0.014 | |
| 1-21 | 1J | 3.0 | 25 | 99.0 | 0.014 | |
| 1-22 | 1J | 3.7 | 22 | 98.9 | 0.015 | |
| 1-23 | 1K | 3.2 | 24 | 99.4 | 0.017 | |
| 1-24 | 1K | 3.8 | 21 | 99.3 | 0.019 | |
| 1-25 | 1L | 3.7 | 22 | 98.8 | 0.014 | |
| 1-26 | 1L | 4.4 | 19 | 98.7 | 0.015 | |
| 1-27 | 1M | 3.2 | 23 | 98.8 | 0.016 | |
| 1-28 | 1M | 3.9 | 20 | 98.9 | 0.015 | |
| 1-29 | 1N | 4.4 | 19 | 98.9 | 0.017 | |
| 1-30 | 1N | 3.6 | 23 | 99.1 | 0.016 | |
| 1-31 | 1O | 4.1 | 20 | 99.3 | 0.018 | |
| 1-32 | 1O | 3.3 | 21 | 99.3 | 0.018 | |
| 1-33 | 1P | 4.2 | 19 | 99.2 | 0.018 | |
| 1-34 | 1P | 3.4 | 20 | 99.1 | 0.017 | |
| 1-35 | 1Q | 5.6 | 14 | 96.4 | 0.013 | COMPARATIVE EXAMPLE |
| 1-36 | 1R | 5.1 | 16 | 96.7 | 0.012 | |
| 1-37 | 1S | 4.0 | 20 | 96.5 | 0.017 | |
| 1-38 | 1T | 4.7 | 17 | 98.6 | 0.015 | |
| 1-39 | 1U | 3.3 | 23 | 98.4 | 0.022 | |
| 1-40 | 1V | 4.2 | 18 | 96.0 | 0.016 | |
| 1-41 | 1W | 5.2 | 15 | 96.5 | 0.014 | |
| 1-42 | 1K | 4.5 | 7 | 99.2 | 0.032 | |
| 1-43 | 1C | 7.0 | 16 | 98.0 | 0.015 | |
| 1-44 | 1O | 4.1 | 20 | 99.3 | 0.018 | |

n.b.) Underline means that the value is out of the range of the present invention.

Thereafter, primary wire drawing was performed to obtain primary wire-drawn materials with a predetermined wire diameter. Subsequently, final patenting treatment was performed to obtain patenting materials with wire diameters presented in Table 3. In the final patenting treatment, temperatures of the materials were maintained at an austenitizing temperature of 980°C for 45 seconds, and were kept at a pearlite transformation temperature of 575°C for 30 seconds. As a bath for causing pearlite transformation, a Pb bath was used. Note that in the test No. 1-44, the pearlite transformation temperature in the final patenting treatment was set to 620°C.

Subsequently, by methods described below, a fraction of pearlite structure and a thickness of cementite of each of the patenting materials were measured. Further, a tensile strength of each of the patenting materials was measured based on JIS Z 2241. Results thereof are presented in Table 3.

The measurement of fraction of pearlite structure of each of the patenting materials was conducted through a method similar to that of the measurement of fraction of pearlite structure of each of the hot-rolled wire rods. Incidentally, a location at which observation (photographing) was performed was set to a position apart from a surface of the patenting material by about $d_p/4$ ($d_p$: diameter of patenting material).

The measurement of thickness of cementite of each of the patenting materials was conducted through a method similar to that of the measurement of thickness of cementite of each of the hot-rolled wire rods. However, a location at which observation (photographing) was performed was set to a position apart from a surface layer of the patenting material by about $d_p/4$ ($d_p$: wire diameter of patenting material).

[Table 3]

| TEST No. | STEEL No. | PATENTING MATERIAL | | | | NOTE |
|---|---|---|---|---|---|---|
| | | DIAMETER (mm) | TENSILE STRENGTH (MPa) | FRACTION OF PERLITE (%) | THICKNESS OF CEMENTITE ($\mu$ m) | |
| 1-1 | 1A | 1.51 | 1406 | 98.6 | 0.009 | EXAMPLE |
| 1-2 | 1A | 1.15 | 1392 | 98.7 | 0.009 | |
| 1-3 | 1A | 0.73 | 1415 | 98.7 | 0.009 | |
| 1-4 | 1B | 1.08 | 1656 | 99.7 | 0.011 | |
| 1-5 | 1B | 0.57 | 1632 | 99.7 | 0.012 | |
| 1-6 | 1C | 0.67 | 1466 | 98.8 | 0.009 | |
| 1-7 | 1C | 1.29 | 1475 | 98.9 | 0.009 | |
| 1-8 | 1C | 1.10 | 1477 | 98.8 | 0.009 | |
| 1-9 | 1D | 0.91 | 1568 | 99.7 | 0.011 | |
| 1-10 | 1D | 0.78 | 1579 | 99.6 | 0.010 | |
| 1-11 | 1E | 1.09 | 1460 | 99.4 | 0.010 | |
| 1-12 | 1E | 1.32 | 1478 | 99.4 | 0.009 | |
| 1-13 | 1F | 0.47 | 1507 | 99.6 | 0.010 | |
| 1-14 | 1F | 0.88 | 1512 | 99.5 | 0.010 | |
| 1-15 | 1G | 1.09 | 1632 | 99.2 | 0.009 | |
| 1-16 | 1G | 0.49 | 1620 | 99.2 | 0.010 | |
| 1-17 | 1H | 0.94 | 1565 | 99.8 | 0.011 | |
| 1-18 | 1H | 1.08 | 1577 | 99.7 | 0.010 | |
| 1-19 | 1I | 0.62 | 1508 | 99.6 | 0.010 | |
| 1-20 | 1I | 1.43 | 1521 | 99.5 | 0.009 | |
| 1-21 | 1J | 0.51 | 1549 | 99.7 | 0.010 | |
| 1-22 | 1J | 1.06 | 1560 | 99.6 | 0.009 | |
| 1-23 | 1K | 1.17 | 1701 | 99.8 | 0.012 | |
| 1-24 | 1K | 1.10 | 1687 | 99.9 | 0.013 | |
| 1-25 | 1L | 0.51 | 1615 | 99.4 | 0.010 | |
| 1-26 | 1L | 0.97 | 1624 | 99.4 | 0.009 | |
| 1-27 | 1M | 1.03 | 1551 | 99.6 | 0.010 | |
| 1-28 | 1M | 0.79 | 1573 | 99.5 | 0.009 | |
| 1-29 | 1N | 0.85 | 1538 | 99.7 | 0.010 | |
| 1-30 | 1N | 1.10 | 1530 | 99.7 | 0.010 | |
| 1-31 | 1O | 1.04 | 1679 | 99.8 | 0.012 | |
| 1-32 | 1O | 0.43 | 1688 | 99.9 | 0.011 | |
| 1-33 | 1P | 0.88 | 1594 | 99.8 | 0.011 | |
| 1-34 | 1P | 0.92 | 1585 | 99.7 | 0.012 | |
| 1-35 | 1Q | 1.04 | 1273 | 97.6 | 0.009 | COMPARATIVE EXAMPLE |
| 1-36 | 1R | 1.58 | 1282 | 97.7 | 0.008 | |
| 1-37 | 1S | 0.58 | 1674 | 97.8 | 0.011 | |
| 1-38 | 1T | 1.38 | 1404 | 99.1 | 0.010 | |
| 1-39 | 1U | 0.88 | 1707 | 99.9 | 0.014 | |
| 1-40 | 1V | 1.04 | 1414 | 96.8 | 0.011 | |
| 1-41 | 1W | 0.48 | 1449 | 97.4 | 0.009 | |
| 1-42 | 1K | 1.10 | 1683 | 99.9 | 0.013 | |
| 1-43 | 1C | 0.67 | 1458 | 98.7 | 0.009 | |
| 1-44 | 1O | 0.74 | 1460 | 99.4 | 0.021 | |

n.b.) Underline means that the value is out of the range of the present invention or out of the desirable range.

Subsequently, brass plating was applied to each of the patenting materials. Thereafter, finish wire drawing was performed to obtain strands for saw wires with diameters presented in Table 4. The finish wire drawing was conducted under conditions in which wire drawing strains presented in Table 4 were provided, a diamond die with a die angle of 10° was used, and a wire drawing speed was set to 900 m/minute. Further, a reduction of area in a final die was set to 4% to 7%. Further, a lubricant with a friction coefficient of 0.1 or less was used, and a temperature of the lubricant was controlled to 70°C or less. After the finish wire drawing, a roller-type straightening machine was used to perform straightening process.

[Table 4]

| TEST No. | STEEL No. | STRAND FOR SAW WIRE | | | NOTE |
|---|---|---|---|---|---|
| | | DIAMETER (mm) | WIRE DRAWING STRAIN $\varepsilon$ | PARAMETER Q | |
| 1-1 | 1A | 0.18 | 4.25 | 436 | EXAMPLE |
| 1-2 | 1A | 0.14 | 4.21 | 429 | |
| 1-3 | 1A | 0.08 | 4.43 | 468 | |
| 1-4 | 1B | 0.16 | 3.81 | 401 | |
| 1-5 | 1B | 0.08 | 3.94 | 421 | |
| 1-6 | 1C | 0.09 | 4.00 | 396 | |
| 1-7 | 1C | 0.17 | 4.05 | 404 | |
| 1-8 | 1C | 0.14 | 4.12 | 415 | |
| 1-9 | 1D | 0.12 | 4.05 | 427 | |
| 1-10 | 1D | 0.10 | 4.10 | 436 | |
| 1-11 | 1E | 0.14 | 4.11 | 420 | |
| 1-12 | 1E | 0.16 | 4.22 | 438 | |
| 1-13 | 1F | 0.06 | 4.12 | 426 | |
| 1-14 | 1F | 0.11 | 4.17 | 435 | |
| 1-15 | 1G | 0.16 | 3.83 | 382 | |
| 1-16 | 1G | 0.07 | 3.89 | 390 | |
| 1-17 | 1H | 0.12 | 4.11 | 433 | |
| 1-18 | 1H | 0.14 | 4.08 | 428 | |
| 1-19 | 1I | 0.08 | 4.11 | 428 | |
| 1-20 | 1I | 0.18 | 4.15 | 434 | |
| 1-21 | 1J | 0.07 | 3.98 | 409 | |
| 1-22 | 1J | 0.14 | 4.05 | 420 | |
| 1-23 | 1K | 0.18 | 3.74 | 400 | |
| 1-24 | 1K | 0.16 | 3.86 | 418 | |
| 1-25 | 1L | 0.07 | 3.96 | 398 | |
| 1-26 | 1L | 0.14 | 3.88 | 386 | |
| 1-27 | 1M | 0.14 | 4.00 | 409 | |
| 1-28 | 1M | 0.10 | 4.13 | 430 | |
| 1-29 | 1N | 0.11 | 4.10 | 426 | |
| 1-30 | 1N | 0.15 | 3.98 | 407 | |
| 1-31 | 1O | 0.14 | 4.02 | 438 | |
| 1-32 | 1O | 0.06 | 3.95 | 427 | |
| 1-33 | 1P | 0.12 | 3.98 | 422 | |
| 1-34 | 1P | 0.12 | 4.07 | 437 | |
| 1-35 | 1Q | 0.10 | 4.69 | 509 | COMPARATIVE EXAMPLE |
| 1-36 | 1R | 0.16 | 4.58 | 483 | |
| 1-37 | 1S | 0.08 | 3.95 | 407 | |
| 1-38 | 1T | 0.14 | 4.57 | 503 | |
| 1-39 | 1U | — | — | — | |
| 1-40 | 1V | 0.13 | 4.15 | 433 | |
| 1-41 | 1W | 0.06 | 4.14 | 422 | |
| 1-42 | 1K | 0.16 | 3.86 | 418 | |
| 1-43 | 1C | 0.09 | 4.00 | 396 | |
| 1-44 | 1O | 0.10 | 3.99 | 433 | |

n.b.) Underline means that the value is out of the range
of the present invention or out of the desirable range.

Regarding each of the strands for saw wires manufactured as above, a fraction of wire-drawn pearlite structure, a ratio between a maximum value and a minimum value of lamellar spacing, a tensile strength, a twist number under tension, a tensile strength ratio under twisting, a tensile elongation under twisting, a difference in Vickers hardness (HV hardness difference), and a residual stress of a surface portion were measured, through methods described below. Results thereof are presented in Table 5.

In the measurement of fraction of wire-drawn pearlite structure of each of the strands for saw wires, pictures of 15 visual fields or more were photographed at a magnification of ×10000 to ×20000 with the SEM. Further, an area fraction of wire-drawn pearlite structure in each visual field was measured through image processing, and an average value of the area fractions was set as a fraction of wire-drawn pearlite structure of the strand for saw wire. Note that a location at which observation (photographing) was performed was set to a position apart from a surface of the strand for saw wire by about $d_w/4$ ($d_w$: diameter of strand for saw wire).

In the measurement of the ratio between the maximum value and the minimum value of the lamellar spacing, observation of structure was conducted with the TEM at a magnification of ×100000, in which the maximum value and the minimum value of the lamellar spacing were measured, and a ratio between these values was calculated.

The tensile strength of each of the strands for saw wires was measured based on JIS Z 2241. At this time, a grip-to-grip distance was set to 100 mm.

In the measurement of the twist number under tension, a twist test was conducted in which a grip-to-grip distance was set to 100 mm, and a twisting speed was set to 60 rpm while applying a tension equal to "a tensile strength" × "a cross-sectional area of wire" × 0.5, and the twist number until the occurrence of breakage was measured. The test was performed 5 times on each of the strands for saw wires, and an average value of the twist numbers was set as the twist number under tension.

In the measurement of the tensile strength ratio under twisting and the measurement of the tensile elongation under twisting, the strand for saw wire was twisted 5 times by setting a grip-to-grip distance to 100 times a wire diameter, and then subjected to a tensile test, in which tensile strength and elongation were measured. Further, a quotient obtained by dividing the tensile strength achieved in the tensile test by a tensile strength in a state of applying no twisting (tensile strength ratio under twisting) was calculated. The test was performed 5 times on each of the strands for saw wires, and average values of the aforementioned quotients (tensile strength ratios under twisting) and elongations were set as the tensile strength ratio under twisting and the tensile elongation under twisting, respectively.

In the measurement of the difference in Vickers hardness (HV hardness difference), a Vickers hardness of a surface portion in which a depth from a surface of the strand for saw wire is within a range of "a wire diameter" × 0.2 or less and a Vickers hardness of a center portion in which a distance from a center of the strand for saw wire is within a range of "the wire diameter" × 0.2 or less, were measured based on JIS Z 2244. Subsequently, a difference thereof was calculated.

In the measurement of the residual stresses of the surface portions of the strands for saw wires, the strands for saw wires with a length of 100 mm were arranged with no space therebetween, and by using X-ray, the residual stresses in a wire drawing direction in center portions of the arranged strands for saw wires were measured.

[Table 5]

Table 5 — STRAND FOR SAW WIRE

| TEST No. | STEEL No. | FRACTION OF WIRE-DRAWN PERLITE (%) | RATIO BETWEEN MAX. AND MIN. OF LAMELLAR SPACING | TENSILE STRENGTH (MPa) | TWIST NUMBER UNDER TENSION (TIME) | TENSILE STRENGTH RATIO UNDER TWISTING (%) | TENSILE ELONGATION UNDER TWISTING (%) | HV HARDNESS DIFFERENCE | RESIDUAL STRESS (MPa) | NOTE |
|---|---|---|---|---|---|---|---|---|---|---|
| 1-1 | 1A | 98.7 | 8.3 | 4086 | 11.2 | 98 | 2.8 | 15 | -509 | EXAMPLE |
| 1-2 | 1A | 98.7 | 8.1 | 4027 | 10.8 | 97 | 3.2 | 14 | -565 | EXAMPLE |
| 1-3 | 1A | 98.7 | 8.7 | 4296 | 5.9 | 95 | 3.0 | 41 | -412 | EXAMPLE |
| 1-4 | 1B | 99.6 | 6.6 | 4073 | 12.0 | 96 | 2.9 | 32 | -684 | EXAMPLE |
| 1-5 | 1B | 99.8 | 7.0 | 4257 | 10.7 | 97 | 3.0 | 24 | -656 | EXAMPLE |
| 1-6 | 1C | 98.9 | 7.3 | 4098 | 13.2 | 98 | 2.7 | 30 | -670 | EXAMPLE |
| 1-7 | 1C | 98.8 | 7.5 | 4173 | 15.4 | 96 | 2.9 | 24 | -605 | EXAMPLE |
| 1-8 | 1C | 98.8 | 7.9 | 4282 | 7.1 | 94 | 2.6 | 38 | -534 | EXAMPLE |
| 1-9 | 1D | 99.7 | 7.5 | 4126 | 13.3 | 95 | 3.2 | 18 | -545 | EXAMPLE |
| 1-10 | 1D | 99.6 | 7.7 | 4198 | 14.2 | 96 | 3.0 | 21 | -605 | EXAMPLE |
| 1-11 | 1E | 99.5 | 7.8 | 4055 | 12.3 | 97 | 3.5 | 16 | -747 | EXAMPLE |
| 1-12 | 1E | 99.4 | 8.2 | 4219 | 10.9 | 98 | 2.9 | 22 | -660 | EXAMPLE |
| 1-13 | 1F | 99.6 | 7.6 | 4214 | 11.7 | 98 | 3.0 | 21 | -693 | EXAMPLE |
| 1-14 | 1F | 99.4 | 7.9 | 4291 | 11.6 | 96 | 3.2 | 26 | -684 | EXAMPLE |
| 1-15 | 1G | 99.3 | 6.6 | 4159 | 13.1 | 96 | 2.8 | 28 | -708 | EXAMPLE |
| 1-16 | 1G | 99.2 | 6.8 | 4246 | 12.8 | 97 | 3.0 | 31 | -687 | EXAMPLE |
| 1-17 | 1H | 99.8 | 7.8 | 4279 | 8.6 | 93 | 3.1 | 27 | -542 | EXAMPLE |
| 1-18 | 1H | 99.6 | 7.6 | 4234 | 11.5 | 95 | 3.3 | 20 | -588 | EXAMPLE |
| 1-19 | 1I | 99.7 | 7.6 | 4104 | 10.7 | 97 | 3.2 | 13 | -395 | EXAMPLE |
| 1-20 | 1I | 99.6 | 7.9 | 4163 | 12.0 | 98 | 3.0 | 19 | -413 | EXAMPLE |
| 1-21 | 1J | 99.7 | 7.2 | 4096 | 13.5 | 99 | 3.4 | 26 | -458 | EXAMPLE |
| 1-22 | 1J | 99.6 | 7.5 | 4198 | 9.9 | 96 | 2.8 | 27 | -497 | EXAMPLE |
| 1-23 | 1K | 99.8 | 6.3 | 4089 | 14.1 | 98 | 3.3 | 28 | -697 | EXAMPLE |
| 1-24 | 1K | 99.8 | 6.7 | 4255 | 12.0 | 93 | 2.8 | 46 | -682 | EXAMPLE |
| 1-25 | 1L | 99.5 | 7.1 | 4189 | 11.0 | 97 | 2.9 | 19 | -800 | EXAMPLE |
| 1-26 | 1L | 99.6 | 6.8 | 4075 | 12.3 | 96 | 2.8 | 23 | -791 | EXAMPLE |
| 1-27 | 1M | 99.6 | 7.3 | 4077 | 12.7 | 97 | 3.0 | 34 | -817 | EXAMPLE |
| 1-28 | 1M | 99.5 | 7.8 | 4266 | 9.1 | 92 | 3.1 | 28 | -854 | EXAMPLE |
| 1-29 | 1N | 99.7 | 7.6 | 4236 | 13.4 | 98 | 2.9 | 27 | -650 | EXAMPLE |
| 1-30 | 1N | 99.8 | 7.2 | 4060 | 14.0 | 99 | 3.4 | 15 | -633 | EXAMPLE |
| 1-31 | 1O | 99.8 | 7.3 | 4269 | 12.4 | 99 | 3.3 | 21 | -596 | EXAMPLE |
| 1-32 | 1O | 99.9 | 7.1 | 4171 | 9.8 | 94 | 3.1 | 23 | -580 | EXAMPLE |
| 1-33 | 1P | 99.8 | 7.2 | 4023 | 12.9 | 98 | 3.7 | 17 | -503 | EXAMPLE |
| 1-34 | 1P | 99.8 | 7.5 | 4149 | 10.7 | 97 | 2.9 | 22 | -537 | EXAMPLE |
| 1-35 | 1Q | 97.6 | _11.5_ | 4125 | 2.1 | 54 | 1.8 | 88 | -428 | COMPARATIVE EXAMPLE |
| 1-36 | 1R | 97.8 | _10.9_ | 4141 | 2.4 | 62 | 1.6 | 75 | -401 | COMPARATIVE EXAMPLE |
| 1-37 | 1S | 97.6 | 7.5 | 4169 | 1.6 | 68 | 1.5 | 28 | -317 | COMPARATIVE EXAMPLE |
| 1-38 | 1T | 99.2 | _10.8_ | 4176 | 1.8 | 74 | 1.9 | 73 | -425 | COMPARATIVE EXAMPLE |
| 1-39 | 1U | — | — | — | — | — | — | — | — | COMPARATIVE EXAMPLE |
| 1-40 | 1V | 96.7 | 8.0 | 4075 | 2.7 | 72 | 1.8 | 38 | -324 | COMPARATIVE EXAMPLE |
| 1-41 | 1W | 97.4 | 7.9 | 4194 | 3.5 | 70 | 1.4 | 42 | -512 | COMPARATIVE EXAMPLE |
| 1-42 | 1K | 99.9 | 6.8 | 4233 | 4.3 | 78 | 1.7 | 53 | -642 | COMPARATIVE EXAMPLE |
| 1-43 | 1C | 98.8 | 7.6 | 4113 | 4.0 | 79 | 1.5 | 35 | -651 | COMPARATIVE EXAMPLE |
| 1-44 | 1O | 99.5 | 7.5 | 4024 | 3.7 | 57 | 1.6 | 83 | -256 | COMPARATIVE EXAMPLE |

n.b.) Underline means that the value is out of the range of the present invention or out of the desirable range.

As presented in Table 5, in the tests No. 1-1 to No. 1-34 being examples of the present invention, excellent properties were achieved such that the tensile strength was 4000 MPa or more, the twist number under tension was 5 or more, the tensile strength ratio under twisting was 80% or more, and the tensile elongation under twisting was 2% or more. Namely, the strands for saw wires with high strength and high ductility were realized.

On the contrary, the tests No. 1-35 to No. 1-41 are comparative examples in which the chemical components of the steel billets and/or the conditions in the finish wire drawing were out of the range of the present invention.

Specifically, in the test No. 1-35, the C content was less than the lower limit of the present invention, Cr was not contained, and the value of the parameter P represented by the (equation 1) was less than 1000. In the test No. 1-36, the C content was less than the lower limit of the present invention, and the value of the parameter P was less than 1000. Accordingly, in the tests No. 1-35 and No. 1-36, the fractions of pearlite structures in the hot-rolled wire rods, the patenting materials and the strands for saw wires were less than the lower limits of the present invention. Further, work hardening rates were low. Accordingly, there was conducted the finish wire drawing in which the wire drawing strain was 4.5 or more, in order to achieve the tensile strength of 4000 MPa or more. As a result, it was not possible to achieve sufficient twist number under tension, tensile strength ratio under twisting, and tensile elongation under twisting. Further, as a result of conducting observation of structures with the TEM at a magnification of ×100000 in cross sections perpendicular to the wire drawing direction of the strands for saw wires in the tests No. 1-35 and No. 1-36, it was confirmed that, qualitatively, there were provided large variations in the lamellar spacing.

In the test No. 1-37, the Si content exceeded the range of the present invention, resulting in that the non-pearlite structure was excessively generated. For this reason, in the test No. 1-37, the fractions of pearlite structures in the hot-rolled wire rod, the patenting material and the strand for saw wire were less than the lower limits of the present invention. Therefore, it was not possible to achieve sufficient twist number under tension, tensile strength ratio under twisting, and tensile elongation under twisting.

In the test No. 1-38, Cr was not added. For this reason, the work hardening rate was low. Accordingly, there was conducted the finish wire drawing in which the wire drawing strain was 4.5 or more in order to achieve the tensile strength of 4000 MPa or more. As a result, it was not possible to achieve sufficient twist number under tension, tensile strength ratio under twisting, and tensile elongation under twisting of the strand for saw wire. Further, the TEM observation similar to that for the strands for saw wires in the tests No. 1-35 and No. 1-36 was conducted, and it was confirmed that, qualitatively, there was provided a large variation in the lamellar spacing.

In the test No. 1-39, the C content exceeded the range of the present invention, and proeutectoid cementite was generated. For this reason, in the test No. 1-39, the wire breakage frequently occurred during the finish wire drawing, and it was not possible to manufacture the strand for saw wire.

In the test No. 1-40, the Mn content exceeded the range of the present invention. In the test No. 1-41, the Cr content exceeded the range of the present invention. Accordingly, in the tests No. 1-40 and No. 1-41, bainite was excessively contained in the hot-rolled wire rods and the patenting materials, resulting in that the fractions of pearlite structures in the hot-rolled wire rods, the patenting materials and the strands for saw wires were less than the lower limits of the present invention. Therefore, it was not possible to achieve sufficient twist number under tension, tensile strength ratio under twisting, and tensile elongation under twisting.

The tests No. 1-42 and No. 1-43 are comparative examples in which the conditions of the hot rolling were out of the range of the present invention.

Specifically, in the test No. 1-42, the cooling rate after the hot rolling was less than the lower limit of the present invention, resulting in that cementite was thick. For this reason, micro-voids were generated in the strand for saw wire, and it was not possible to achieve sufficient twist number under tension and tensile strength ratio under twisting.

In the test No. 1-43, the diameter of the hot-rolled wire rod exceeded the range of the present invention, so that the intermediate wire drawing and the intermediate heat treatment were repeatedly conducted. As a result, it was not possible to achieve sufficient twist number under tension and tensile strength ratio under twisting of the strand for saw wire.

In the test No. 1-44, the thickness of cementite of the patenting material exceeded the range of the present invention, resulting in that micro-voids were generated in the strand for saw wire. For this reason, it was not possible to achieve sufficient twist number under tension, tensile strength ratio under twisting, and tensile elongation under twisting. Note that in the test No. 1-44, the temperature of the patenting treatment (620°C) was higher than the desirable temperature range (520°C to 600°C).

(Second Experiment)

In a second experiment, first, steel billets having chemical components presented in Table 6 (steels No. 2A to 2W) were subjected to hot rolling, and then cooled at cooling rates presented in Table 7, thereby obtaining hot-rolled wire rods with diameters presented in Table 7 (tests No. 2-1 to No. 2-45). Finish rolling in the hot rolling was conducted within a temperature range of 920°C to 950°C. The cooling rates were controlled through air blasting. Further, by methods similar to those of the first experiment, a fraction of pearlite structure and a thickness of cementite of each of the hot-rolled wire rods were measured. Results thereof are presented in Table 7.

[Table 6]

| STEEL | CHEMICAL COMPONENT (MASS%) | | | | | | | | | | | | PARAMETER | NOTE |
|---|---|---|---|---|---|---|---|---|---|---|---|---|---|---|
| No. | C | Si | Mn | Cr | P | S | N | Ni | Cu | Mo | V | B | P | |
| 2A | 0.94 | 0.18 | 0.30 | 0.27 | 0.007 | 0.005 | 0.0029 | — | — | — | — | — | 1089 | EXAMPLE |
| 2B | 1.12 | 0.26 | 0.36 | 0.22 | 0.009 | 0.004 | 0.0032 | — | — | — | — | 0.0016 | 1285 | |
| 2C | 1.10 | 0.18 | 0.30 | 0.17 | 0.008 | 0.007 | 0.0031 | — | — | 0.03 | — | 0.0018 | 1248 | |
| 2D | 1.05 | 0.35 | 0.40 | 0.10 | 0.005 | 0.006 | 0.0047 | 0.27 | — | — | — | — | 1196 | |
| 2E | 0.96 | 0.22 | 0.33 | 0.47 | 0.008 | 0.005 | 0.0034 | — | — | — | — | — | 1148 | |
| 2F | 0.97 | 0.18 | 0.36 | 0.30 | 0.007 | 0.006 | 0.0025 | — | 0.14 | — | — | — | 1126 | |
| 2G | 1.17 | 1.32 | 0.29 | 0.13 | 0.008 | 0.005 | 0.0024 | — | — | — | — | — | 1430 | |
| 2H | 1.02 | 0.20 | 0.29 | 0.24 | 0.009 | 0.009 | 0.0041 | — | — | — | — | — | 1174 | |
| 2I | 0.99 | 0.18 | 0.44 | 0.18 | 0.004 | 0.007 | 0.0024 | — | — | 0.04 | — | 0.0010 | 1126 | |
| 2J | 1.00 | 0.22 | 0.64 | 0.36 | 0.008 | 0.009 | 0.0042 | 0.15 | 0.10 | — | — | — | 1167 | |
| 2K | 1.18 | 0.18 | 0.30 | 0.19 | 0.007 | 0.008 | 0.0040 | — | — | — | — | — | 1339 | |
| 2L | 1.14 | 0.07 | 0.61 | 0.16 | 0.005 | 0.006 | 0.0028 | — | — | — | 0.13 | — | 1273 | |
| 2M | 0.98 | 0.55 | 0.19 | 0.14 | 0.008 | 0.009 | 0.0036 | — | — | 0.03 | 0.04 | 0.0014 | 1150 | |
| 2N | 0.99 | 0.32 | 0.35 | 0.27 | 0.007 | 0.006 | 0.0024 | 0.08 | — | — | — | 0.0016 | 1156 | |
| 2O | 1.15 | 0.71 | 0.96 | 0.08 | 0.007 | 0.008 | 0.0031 | — | — | — | — | — | 1326 | |
| 2P | 1.09 | 0.17 | 0.41 | 0.04 | 0.006 | 0.009 | 0.0027 | — | — | — | — | 0.0022 | 1212 | |
| 2Q | 0.82 | 0.21 | 0.48 | 0.00 | 0.012 | 0.006 | 0.0038 | — | — | — | — | — | 911 | COMPARATIVE EXAMPLE |
| 2R | 0.80 | 0.19 | 0.46 | 0.15 | 0.008 | 0.010 | 0.0046 | — | — | — | — | — | 913 | |
| 2S | 1.02 | 2.14 | 0.79 | 0.23 | 0.006 | 0.005 | 0.0022 | — | — | — | — | — | 1352 | |
| 2T | 0.93 | 0.22 | 0.53 | 0.00 | 0.007 | 0.007 | 0.0026 | — | — | — | — | — | 1032 | |
| 2U | 1.27 | 0.16 | 0.80 | 0.40 | 0.006 | 0.009 | 0.0042 | — | — | — | — | — | 1461 | |
| 2V | 0.98 | 0.56 | 1.95 | 0.18 | 0.006 | 0.006 | 0.0023 | — | — | — | — | — | 1122 | |
| 2W | 0.92 | 0.20 | 0.46 | 0.82 | 0.006 | 0.009 | 0.0036 | — | — | — | — | — | 1158 | |

n.b.) Underline means that the value is out of the range of the present invention or out of the desirable range.

n.b.) "–" of the selective element means that the element is not added o purpose.

[Table 7]

[Table 7]

| TEST No. | STEEL No. | HOT-ROLLED WIRE ROD | | | | NOTE |
|---|---|---|---|---|---|---|
| | | DIAMETER (mm) | COOLING RATE (°C/SEC) | FRACTION OF PERLITE (%) | THICKNESS OF CEMENTITE (μm) | |
| 2-1 | 2A | 3.2 | 20 | 98.7 | 0.015 | EXAMPLE |
| 2-2 | 2A | 5.5 | 18 | 98.6 | 0.016 | |
| 2-3 | 2A | 4.3 | 18 | 98.7 | 0.015 | |
| 2-4 | 2B | 4.1 | 19 | 99.2 | 0.020 | |
| 2-5 | 2B | 3.0 | 24 | 99.4 | 0.017 | |
| 2-6 | 2C | 4.8 | 21 | 98.9 | 0.018 | |
| 2-7 | 2C | 3.7 | 23 | 99.0 | 0.016 | |
| 2-8 | 2D | 3.9 | 23 | 99.1 | 0.016 | |
| 2-9 | 2D | 4.1 | 21 | 99.2 | 0.017 | |
| 2-10 | 2E | 5.0 | 18 | 98.8 | 0.016 | |
| 2-11 | 2E | 3.4 | 23 | 99.1 | 0.014 | |
| 2-12 | 2F | 5.0 | 17 | 98.9 | 0.016 | |
| 2-13 | 2F | 4.1 | 19 | 98.9 | 0.015 | |
| 2-14 | 2G | 3.8 | 24 | 99.5 | 0.018 | |
| 2-15 | 2G | 3.0 | 19 | 99.4 | 0.017 | |
| 2-16 | 2H | 3.9 | 22 | 98.9 | 0.015 | |
| 2-17 | 2H | 4.5 | 18 | 98.9 | 0.016 | |
| 2-18 | 2I | 4.7 | 19 | 98.7 | 0.017 | |
| 2-19 | 2I | 3.3 | 22 | 98.6 | 0.014 | |
| 2-20 | 2J | 3.0 | 25 | 99.0 | 0.014 | |
| 2-21 | 2J | 3.7 | 22 | 98.9 | 0.015 | |
| 2-22 | 2K | 3.2 | 24 | 99.4 | 0.017 | |
| 2-23 | 2K | 3.8 | 21 | 99.3 | 0.019 | |
| 2-24 | 2K | 3.0 | 25 | 99.4 | 0.018 | |
| 2-25 | 2L | 3.0 | 20 | 99.2 | 0.016 | |
| 2-26 | 2L | 4.2 | 22 | 99.3 | 0.018 | |
| 2-27 | 2M | 3.2 | 23 | 98.8 | 0.016 | |
| 2-28 | 2M | 3.9 | 20 | 98.9 | 0.015 | |
| 2-29 | 2M | 4.8 | 20 | 98.9 | 0.015 | |
| 2-30 | 2N | 4.4 | 19 | 98.9 | 0.017 | |
| 2-31 | 2N | 3.6 | 23 | 99.1 | 0.016 | |
| 2-32 | 2O | 4.1 | 20 | 99.3 | 0.018 | |
| 2-33 | 2O | 3.3 | 21 | 99.3 | 0.018 | |
| 2-34 | 2P | 4.2 | 19 | 99.2 | 0.018 | |
| 2-35 | 2P | 3.4 | 20 | 99.1 | 0.017 | |
| 2-36 | 2Q | 5.6 | 14 | _96.4_ | 0.013 | COMPARATIVE EXAMPLE |
| 2-37 | 2R | 5.1 | 16 | _96.7_ | 0.012 | |
| 2-38 | 2S | 4.0 | 20 | _96.5_ | 0.017 | |
| 2-39 | 2T | 4.7 | 17 | 98.6 | 0.015 | |
| 2-40 | 2U | 3.3 | 23 | 98.4 | 0.022 | |
| 2-41 | 2V | 4.2 | 18 | _96.0_ | 0.016 | |
| 2-42 | 2W | 5.2 | 15 | _96.5_ | 0.014 | |
| 2-43 | 2K | 4.5 | _7_ | 99.2 | _0.032_ | |
| 2-44 | 2B | _7.5_ | 15 | 99.1 | 0.022 | |
| 2-45 | 2O | 4.1 | 20 | 99.3 | 0.018 | |

n.b.) Underline means that the value is out of the range of the present invention.

**EP 2 557 191 B1**

Thereafter, primary wire drawing was performed to obtain primary wire-drawn materials with a predetermined wire diameter. Subsequently, final patenting treatment was performed to obtain patenting materials with wire diameters presented in Table 8. In the final patenting treatment, temperatures of the materials were maintained at an austenitizing temperature of 980°C for 45 seconds, and were kept at a pearlite transformation temperature of 575°C for 30 seconds. As a bath for causing pearlite transformation, a Pb bath was used. Note that in the test No. 2-45, the pearlite transformation temperature in the final patenting treatment was set to 620°C.

Subsequently, by methods similar to those of the first experiment, a tensile strength, a fraction of pearlite structure and a thickness of cementite of each of the patenting materials were measured. Results thereof are presented in Table 8.

[Table 8]

| TEST No. | STEEL No. | PATENTING MATERIAL | | | | NOTE |
| --- | --- | --- | --- | --- | --- | --- |
| | | DIAMETER (mm) | TENSILE STRENGTH (MPa) | FRACTION OF PERLITE (%) | THICKNESS OF CEMENTITE ($\mu$ m) | |
| 2-1 | 2A | 1.02 | 1480 | 99.4 | 0.009 | EXAMPLE |
| 2-2 | 2A | 0.63 | 1493 | 99.5 | 0.010 | |
| 2-3 | 2A | 1.50 | 1475 | 99.5 | 0.010 | |
| 2-4 | 2B | 1.00 | 1646 | 99.6 | 0.012 | |
| 2-5 | 2B | 0.56 | 1635 | 99.6 | 0.012 | |
| 2-6 | 2C | 1.31 | 1639 | 99.6 | 0.012 | |
| 2-7 | 2C | 0.89 | 1627 | 99.7 | 0.012 | |
| 2-8 | 2D | 1.24 | 1572 | 99.7 | 0.011 | |
| 2-9 | 2D | 0.78 | 1574 | 99.7 | 0.010 | |
| 2-10 | 2E | 1.08 | 1540 | 99.5 | 0.011 | |
| 2-11 | 2E | 0.59 | 1535 | 99.6 | 0.010 | |
| 2-12 | 2F | 0.58 | 1505 | 99.6 | 0.010 | |
| 2-13 | 2F | 1.09 | 1506 | 99.4 | 0.010 | |
| 2-14 | 2G | 0.98 | 1720 | 99.8 | 0.013 | |
| 2-15 | 2G | 0.72 | 1714 | 99.7 | 0.012 | |
| 2-16 | 2H | 0.88 | 1568 | 99.7 | 0.011 | |
| 2-17 | 2H | 1.12 | 1566 | 99.7 | 0.010 | |
| 2-18 | 2I | 0.73 | 1510 | 99.6 | 0.010 | |
| 2-19 | 2I | 1.20 | 1519 | 99.7 | 0.011 | |
| 2-20 | 2J | 0.54 | 1555 | 99.6 | 0.010 | |
| 2-21 | 2J | 1.27 | 1551 | 99.6 | 0.009 | |
| 2-22 | 2K | 0.83 | 1690 | 99.8 | 0.014 | |
| 2-23 | 2K | 1.12 | 1686 | 99.9 | 0.013 | |
| 2-24 | 2K | 0.72 | 1694 | 99.9 | 0.013 | |
| 2-25 | 2L | 0.56 | 1673 | 99.8 | 0.012 | |
| 2-26 | 2L | 0.91 | 1689 | 99.9 | 0.012 | |
| 2-27 | 2M | 0.59 | 1584 | 99.5 | 0.010 | |
| 2-28 | 2M | 1.12 | 1581 | 99.6 | 0.009 | |
| 2-29 | 2M | 0.93 | 1589 | 99.6 | 0.009 | |
| 2-30 | 2N | 0.89 | 1541 | 99.8 | 0.010 | |
| 2-31 | 2N | 1.37 | 1549 | 99.7 | 0.011 | |
| 2-32 | 2O | 1.14 | 1675 | 99.8 | 0.012 | |
| 2-33 | 2O | 0.49 | 1683 | 99.8 | 0.011 | |
| 2-34 | 2P | 0.80 | 1591 | 99.8 | 0.012 | |
| 2-35 | 2P | 1.18 | 1583 | 99.8 | 0.012 | |
| 2-36 | 2Q | 1.04 | 1273 | 97.6 | 0.009 | COMPARATIVE EXAMPLE |
| 2-37 | 2R | 1.58 | 1282 | 97.7 | 0.008 | |
| 2-38 | 2S | 0.65 | 1651 | 97.3 | 0.011 | |
| 2-39 | 2T | 1.02 | 1410 | 99.1 | 0.010 | |
| 2-40 | 2U | 0.88 | 1707 | 99.9 | 0.014 | |
| 2-41 | 2V | 1.11 | 1420 | 96.9 | 0.011 | |
| 2-42 | 2W | 0.53 | 1463 | 97.5 | 0.009 | |
| 2-43 | 2K | 1.27 | 1675 | 99.9 | 0.013 | |
| 2-44 | 2B | 0.85 | 1635 | 99.7 | 0.012 | |
| 2-45 | 2O | 0.85 | 1469 | 99.4 | 0.022 | |

n.b.) Underline means that the value is out of the range of the present invention.

Subsequently, brass plating was applied to each of the patenting materials. Thereafter, finish wire drawing was performed to obtain strands for saw wires with diameters presented in Table 9. The finish wire drawing was conducted under conditions in which wire drawing strains presented in Table 9 were provided, a diamond die with a die angle of 10° was used, and a wire drawing speed was set to 900 m/minute. Further, a reduction of area in a final die was set to 4% to 7%. Further, a lubricant wit h a friction coefficient of 0.1 or less was used, and a temperature of the lubricant was controlled to 70°C or less. After the finish wire drawing, a roller-type straightening machine was used to perform straightening process.

[Table 9]

| TEST No. | STEEL No. | STRAND FOR SAW WIRE | | | NOTE |
|---|---|---|---|---|---|
| | | DIAMETER (mm) | WIRE DRAWING STRAIN ε | PARAMETER Q | |
| 2-1 | 2A | 0.12 | 4.28 | 449 | EXAMPLE |
| 2-2 | 2A | 0.07 | 4.41 | 473 | |
| 2-3 | 2A | 0.16 | 4.48 | 486 | |
| 2-4 | 2B | 0.13 | 4.09 | 445 | |
| 2-5 | 2B | 0.07 | 4.15 | 455 | |
| 2-6 | 2C | 0.16 | 4.20 | 461 | |
| 2-7 | 2C | 0.10 | 4.38 | 494 | |
| 2-8 | 2D | 0.15 | 4.22 | 456 | |
| 2-9 | 2D | 0.09 | 4.32 | 474 | |
| 2-10 | 2E | 0.13 | 4.24 | 445 | |
| 2-11 | 2E | 0.07 | 4.26 | 449 | |
| 2-12 | 2F | 0.07 | 4.22 | 443 | |
| 2-13 | 2F | 0.12 | 4.41 | 478 | |
| 2-14 | 2G | 0.13 | 4.03 | 443 | |
| 2-15 | 2G | 0.09 | 4.17 | 467 | |
| 2-16 | 2H | 0.10 | 4.36 | 477 | |
| 2-17 | 2H | 0.14 | 4.16 | 441 | |
| 2-18 | 2I | 0.08 | 4.41 | 481 | |
| 2-19 | 2I | 0.14 | 4.30 | 461 | |
| 2-20 | 2J | 0.06 | 4.39 | 479 | |
| 2-21 | 2J | 0.15 | 4.28 | 459 | |
| 2-22 | 2K | 0.10 | 4.23 | 479 | |
| 2-23 | 2K | 0.14 | 4.15 | 465 | |
| 2-24 | 2K | 0.08 | 4.40 | 511 | |
| 2-25 | 2L | 0.07 | 4.17 | 462 | |
| 2-26 | 2L | 0.12 | 4.05 | 442 | |
| 2-27 | 2M | 0.07 | 4.28 | 455 | |
| 2-28 | 2M | 0.13 | 4.30 | 459 | |
| 2-29 | 2M | 0.10 | 4.45 | 487 | |
| 2-30 | 2N | 0.11 | 4.19 | 441 | |
| 2-31 | 2N | 0.16 | 4.30 | 461 | |
| 2-32 | 2O | 0.15 | 4.06 | 445 | |
| 2-33 | 2O | 0.06 | 4.19 | 467 | |
| 2-34 | 2P | 0.09 | 4.36 | 488 | |
| 2-35 | 2P | 0.14 | 4.27 | 472 | |
| 2-36 | 2Q | 0.10 | 4.69 | 509 | COMPARATIVE EXAMPLE |
| 2-37 | 2R | 0.16 | 4.58 | 483 | |
| 2-38 | 2S | 0.08 | 4.19 | 446 | |
| 2-39 | 2T | 0.10 | 4.65 | 520 | |
| 2-40 | 2U | — | — | — | |
| 2-41 | 2V | 0.13 | 4.29 | 457 | |
| 2-42 | 2W | 0.06 | 4.36 | 460 | |
| 2-43 | 2K | 0.16 | 4.15 | 465 | |
| 2-44 | 2B | 0.11 | 4.10 | 447 | |
| 2-45 | 2O | 0.10 | 4.29 | 485 | |

n.b.) Underline means that the value is out of the range of the present invention.

Regarding each of the strands for saw wires manufactured as above, a fraction of wire-drawn pearlite structure, a ratio between a maximum value and a minimum value of lamellar spacing, a tensile strength, a twist number under tension, a tensile strength ratio under twisting, a tensile elongation under twisting, a difference in Vickers hardness (HV hardness difference), and a residual stress of a surface portion were measured, through methods similar to those of the first experiment. Results thereof are presented in Table 10.

[Table 10]

| TEST No. | STEEL No. | FRACTION OF WIRE-DRAWN PERLITE (%) | RATIO BETWEEN MAX. AND MIN OF LAMELLAR SPACING | STRAND FOR SAW WIRE TENSILE STRENGTH (MPa) | TWIST NUMBER UNDER TENSION (TIME) | TENSILE STRENGTH RATIO UNDER TWISTING (%) | TENSILE ELONGATION UNDER TWISTING (%) | HV HARDNESS DIFFERENCE | RESIDUAL STRESS (MPa) | NOTE |
|---|---|---|---|---|---|---|---|---|---|---|
| 2-1 | 2A | 99.5 | 8.3 | 4367 | 10.8 | 94 | 2.9 | 43 | -540 | EXAMPLE |
| 2-2 | 2A | 99.6 | 8.9 | 4583 | 10.1 | 92 | 3.0 | 36 | -562 | |
| 2-3 | 2A | 99.6 | 9.0 | 4690 | 7.0 | 92 | 2.8 | 48 | -424 | |
| 2-4 | 2B | 99.8 | 7.6 | 4484 | 11.4 | 96 | 2.6 | 30 | -667 | |
| 2-5 | 2B | 99.8 | 7.9 | 4580 | 11.2 | 96 | 2.4 | 32 | -670 | |
| 2-6 | 2C | 99.6 | 8.0 | 4541 | 11.8 | 96 | 2.9 | 27 | -590 | |
| 2-7 | 2C | 99.8 | 8.8 | 4795 | 11.2 | 94 | 3.0 | 36 | -607 | |
| 2-8 | 2D | 99.6 | 8.1 | 4379 | 13.9 | 97 | 3.2 | 29 | -619 | |
| 2-9 | 2D | 99.7 | 8.6 | 4538 | 13.5 | 97 | 2.9 | 37 | -594 | |
| 2-10 | 2E | 99.7 | 8.2 | 4604 | 12.8 | 95 | 2.8 | 47 | -709 | |
| 2-11 | 2E | 99.6 | 8.3 | 4639 | 13.9 | 97 | 3.3 | 40 | -682 | |
| 2-12 | 2F | 99.6 | 7.7 | 4369 | 11.6 | 97 | 3.0 | 29 | -710 | |
| 2-13 | 2F | 99.5 | 9.0 | 4667 | 11.2 | 96 | 3.1 | 34 | -712 | |
| 2-14 | 2G | 99.9 | 7.4 | 4693 | 12.3 | 94 | 3.1 | 42 | -590 | |
| 2-15 | 2G | 99.7 | 7.9 | 4812 | 11.7 | 93 | 2.8 | 49 | -584 | |
| 2-16 | 2H | 99.8 | 8.8 | 4685 | 10.7 | 92 | 3.1 | 18 | -579 | |
| 2-17 | 2H | 99.7 | 7.8 | 4356 | 11.1 | 96 | 3.2 | 12 | -595 | |
| 2-18 | 2I | 99.6 | 9.0 | 4574 | 10.6 | 96 | 3.0 | 29 | -458 | |
| 2-19 | 2I | 99.7 | 8.4 | 4393 | 11.9 | 97 | 3.1 | 23 | -436 | |
| 2-20 | 2J | 99.7 | 8.9 | 4751 | 9.8 | 94 | 2.9 | 33 | -481 | |
| 2-21 | 2J | 99.7 | 8.4 | 4562 | 10.7 | 97 | 3.2 | 21 | -516 | |
| 2-22 | 2K | 99.9 | 8.1 | 4797 | 11.7 | 92 | 3.0 | 49 | -631 | |
| 2-23 | 2K | 99.8 | 7.9 | 4703 | 10.6 | 94 | 3.1 | 40 | -673 | |
| 2-24 | 2K | 99.9 | 9.0 | 5163 | 10.1 | 92 | 3.0 | 24 | -707 | |
| 2-25 | 2L | 99.9 | 7.9 | 4708 | 11.2 | 92 | 2.9 | 37 | -744 | |
| 2-26 | 2L | 99.9 | 7.4 | 4517 | 13.6 | 98 | 3.0 | 22 | -757 | |
| 2-27 | 2M | 99.6 | 8.4 | 4500 | 9.3 | 93 | 3.2 | 23 | -838 | |
| 2-28 | 2M | 99.5 | 8.5 | 4532 | 9.8 | 93 | 3.1 | 34 | -871 | |
| 2-29 | 2M | 99.6 | 9.0 | 4727 | 5.5 | 91 | 2.8 | 45 | -346 | |
| 2-30 | 2N | 99.8 | 8.0 | 4375 | 13.1 | 97 | 2.9 | 28 | -615 | |
| 2-31 | 2N | 99.8 | 8.4 | 4553 | 12.6 | 97 | 3.0 | 39 | -686 | |
| 2-32 | 2O | 99.8 | 7.6 | 4327 | 11.9 | 94 | 3.1 | 29 | -580 | |
| 2-33 | 2O | 99.9 | 8.0 | 4523 | 9.6 | 93 | 3.0 | 29 | -557 | |
| 2-34 | 2P | 99.8 | 8.7 | 4593 | 10.8 | 97 | 3.2 | 29 | -549 | |
| 2-35 | 2P | 99.8 | 8.4 | 4448 | 10.1 | 96 | 3.3 | 39 | -564 | |
| 2-36 | 2Q | 97.6 | 11.5 | 4125 | 2.1 | 54 | 1.8 | 88 | -428 | COMPARATIVE EXAMPLE |
| 2-37 | 2R | 97.8 | 10.9 | 4141 | 2.4 | 62 | 1.6 | 75 | -401 | |
| 2-38 | 2S | 97.5 | 8.1 | 4434 | 1.3 | 58 | 1.4 | 42 | -289 | |
| 2-39 | 2T | 99.1 | 11.2 | 4243 | 1.7 | 70 | 1.8 | 68 | -389 | |
| 2-40 | 2U | — | — | — | — | — | — | — | — | |
| 2-41 | 2V | 96.8 | 8.6 | 4130 | 2.6 | 71 | 1.6 | 42 | -304 | |
| 2-42 | 2W | 97.4 | 8.5 | 4437 | 3.0 | 68 | 1.1 | 64 | -458 | |
| 2-43 | 2K | 99.9 | 8.0 | 4660 | 4.1 | 74 | 1.5 | 55 | -631 | |
| 2-44 | 2B | 99.8 | 7.8 | 4577 | 4.6 | 77 | 1.8 | 37 | -623 | |
| 2-45 | 2O | 99.4 | 8.6 | 4301 | 3.5 | 54 | 1.6 | 80 | -259 | |

n.b.) Underline means that the value is out of the range of the present invention.

As presented in Table 10, in the tests No. 2-1 to No. 2-35 being examples of the present invention, excellent properties were achieved such that the tensile strength was 4300 MPa or more, which is a favorable value, the twist number under tension was 5 or more, the tensile strength ratio under twisting was 80% or more, and the tensile elongation under twisting was 2% or more. Namely, the strands for saw wires with high strength and high ductility were realized.

On the contrary, the tests No. 2-36 to No. 2-42 are comparative examples in which the chemical components of the steel billets and/or the conditions in the finish wire drawing were out of the range of the present invention.

Specifically, in the test No. 2-36, the C content was less than the lower limit of the present invention, Cr was not contained, and the value of the parameter P was less than 1000. In the test No. 2-37, the C content was less than the lower limit of the present invention, and the value of the parameter P was less than 1000. Accordingly, in the tests No. 2-36 and No. 2-37, the fractions of pearlite structures in the hot-rolled wire rods, the patenting materials and the strands for saw wires were less than the lower limits of the present t invention. Further, work hardening rates were low. Accordingly, there was conducted the finish wire drawing in which the wire drawing strain was 4.5 or more, in order to achieve the tensile strength of 4000 MPa or more. As a result, it was not possible to achieve sufficient twist number under tension, tensile strength ratio under twisting, and tensile elongation under twisting. Further, as a result of the TFM observation, it was confirmed that, qualitatively, there were provided large variations in the lamellar spacing.

In the test No. 2-38, the Si content exceeded the range of the present invention, resulting in that the non-pearlite structure was excessively generated. For this reason, in the test No. 2-38, the fractions of pearlite structures in the hot-rolled wire rod, the patenting material and the strand for saw wire were less than the lower limits of the present invention. Therefore, it was not possible to achieve sufficient twist number under tension, tensile strength ratio under twisting, and tensile elongation under twisting.

In the test No. 2-39, Cr was not added. For this reason, the work hardening rate was low. Accordingly, there was conducted the finish wire drawing in which the wire drawing strain was 4.5 or more in order to achieve the tensile strength of 4000 MPa or more. As a result, it was not possible to achieve sufficient twist number under tension, tensile strength ratio under twisting, and tensile elongation under twisting of the strand for saw wire. Further, as a result of the TEM observation, it was confirmed that, qualitatively, there was provided a large variation in the lamellar spacing.

In the test No. 2-40, the C content exceeded the range of the present invention, and proeutectoid cementite was generated. For this reason, in the test No. 2-40, the wire breakage frequently occurred during the finish wire drawing, and it was not possible to manufacture the strand for saw wire.

In the test No. 2-41, the Mn content exceeded the range of the present invention. In the test No. 2-42, the Cr content exceeded the range of the present invention. Accordingly, in the tests No. 2-41 and No. 2-42, bainite was excessively contained in the hot-rolled wire rods and the patenting materials, resulting in that the fractions of pearlite structures in the hot-rolled wire rods, the patenting materials and the strands for saw wires were less than the lower limits of the present invention. Therefore, it was not possible to achieve sufficient twist number under tension, tensile strength ratio under twisting, and tensile elongation under twisting.

The tests No. 2-43 and No. 2-44 are comparative examples in which the conditions of the hot rolling were out of the range of the present invention.

Specifically, in the test No. 2-43, the cooling rate after the hot rolling was less than the lower limits of the present invention, resulting in that cementite was thick. For this reason, micro-voids were generated in the strand for saw wire, and it was not possible to achieve sufficient twist number under tension and tensile strength ratio under twisting.

In the test No. 2-44, the diameter of the hot-rolled wire rod exceeded the range of the present invention, so that the intermediate wire drawing and the intermediate heat treatment were repeatedly conducted. As a result, it was not possible to achieve sufficient twist number under tension and tensile strength ratio under twisting of the strand for saw wire.

In the test No. 2-45, the thickness of cementite of the patenting material exceeded the range of the present invention, resulting in that micro-voids were generated in the strand for saw wire. For this reason, it was not possible to achieve sufficient twist number under tension, tensile strength ratio under twisting, and tensile elongation under twisting. Note that in the test No. 2-45, the temperature of the patenting treatment (620°C) was higher than the desirable temperature range (520°C to 600°C).

INDUSTRIAL APPLICABILITY

The present invention may be utilized in industries related to saw wires used for cutting various materials, for example.

**Claims**

1. A strand for saw wire, containing:

in mass%,
C: 0.87% to 1.2%;
Si: 0.02% to 2.0%;
Mn: 0.1% to 1.0%; and
Cr: 0.5% or less,
wherein
regarding contents of C, Si, Mn and Cr, a value of parameter P represented by a following equation 1 is 1000 or more,
a P content is 0.015% or less,
an S content is 0.015% or less,
an N content is 0.01% or less,
and optionally further containing, in mass%, at least one kind selected from a group consisting of:

Ni: 1.0% or less,
Cu: 0.5% or less,
Mo: 0.5% or less,
V: 0.5% or less, and
B: 0.0050% or less, and
a balance is composed of Fe and inevitable impurities,

a metallic structure contains wire-drawn pearlite in an area ratio of 98% or more,
a diameter is 0.05 mm to 0.18 mm,
a tensile strength is 4000 MPa or more,
a difference in Vickers hardness between a surface portion in which a depth from a surface of the strand for saw wire is within a range of the diameter $\times$ 0.2 or less and a center portion in which a distance from a center of the strand for saw wire is within a range of the diameter x 0.2 or less, is 100 or less, and
a twist number in a twist test in which a grip-to-grip distance is 100 mm, and a tension equal to a tensile strength $\times$ a cross-sectional area of wire $\times$ 0.5 is applied, is 5 or more:

$$P = 1098 \times [C] + 98 \times [Si] - 20 \times [Mn] + 167 \times [Cr] \ \ldots \ \text{equation 1}$$

wherein in the equation 1, [C], [Si], [Mn] and [Cr] indicate contents in mass% of C, Si, Mn and Cr, respectively.

2. The strand for saw wire according to claim 1, wherein
a C content is 0.92 mass% or more,
the value of parameter P is 1050 or more, and
the metallic structure contains the wire-drawn pearlite in an area ratio of 99% or more.

3. The strand for saw wire according to claim 1 or 2, wherein a ratio of the tensile strength under twisting with respect to the tensile strength in a state of applying no twisting is 85% or more;
wherein the tensile strength under twisting is measured by twisting the strand for saw wire 5 times by setting a grip-to-grip distance to 100 times a wire diameter, and then subjecting it to a tensile test, in which tensile strength is measured; the tensile strength in a state of applying no twisting is measured in the tensile test by a tensile strength in a state of applying no twisting; then a quotient is calculated by dividing the tensile strength under twisting by the tensile strength in a state of applying no twisting; the test is performed 5 times on each of the strands for saw wires; and the ratio of the tensile strength under twisting with respect to the tensile strength in a state of applying no twisting is the average value of the five quotients.

4. The strand for saw wire according to any one of claims 1 to 3, wherein a tensile elongation under twisting is 2% or more;
wherein the tensile elongation under twisting is measured by twisting the strand for saw wire 5 times by setting a grip-to-grip distance to 100 times a wire diameter, and then subjecting it to a tensile test, in which tensile elongation is measured; the test is performed 5 times on each of the strands for saw wires; and the tensile elongation under twisting is the average value of the five measurements.

5. The strand for saw wire according to any one of claims 1 to 4, wherein a residual stress of a surface portion of the strand for saw wire is -100 MPa or less.

6. The strand for saw wire according to any one of claims 1 to 5, further containing, in mass%, at least one kind selected from a group consisting of:

Ni: 1.0% or less;
Cu: 0.5% or less;
Mo: 0.5% or less;
V: 0.5% or less; and
B: 0.0050% or less.

7. A manufacturing method of a strand for saw wire, comprising:

performing hot rolling on a steel billet and cooling the resultant at a rate of 10°C/second or more so as to obtain a hot-rolled wire rod whose diameter is 6 mm or less and having a structure containing 97% or more of pearlite in which a thickness of cementite is 0.03 $\mu$m or less;
performing primary wire drawing on the hot-rolled wire rod so as to obtain a primary wire-drawn material;
performing final patenting treatment on the primary wire-drawn material so as to obtain a patenting material having a structure containing 98% or more of pearlite in which a thickness of cementite is 0.02 $\mu$m or less; and
performing finish wire drawing of the patenting material by setting a wire drawing strain s to less than 4.5, wherein
the steel billet contains:

in mass%,
C: 0.87% to 1.2%;
Si: 0.02% to 2.0%;
Mn: 0.1 % to 1.0%; and
Cr: 0.5% or less,
regarding contents of C, Si, Mn and Cr, a value of parameter P represented by a following equation 1 is 1000 or more,
a P content is 0.015% or less,
an S content is 0.015% or less,
an N content is 0.01% or less, and
and optionally further containing, in mass%, at least one kind selected from a group consisting of:

Ni: 1.0% or less;
Cu: 0.5% or less;
Mo: 0.5% or less;
V: 0.5% or less; and
B: 0.0050% or less, and
a balance is composed of Fe and inevitable impurities, and

regarding the wire drawing strain $\varepsilon$, a value of parameter Q represented by a following equation 2 is 380 or more:

$$P = 1098 \times [C] + 98 \times [Si] - 20 \times [Mn] + 167 \times [Cr] \ \ldots \ \text{equation 1}$$

$$Q = 99 \times [C] + 2.7 \times \exp(\varepsilon/2) / (0.075 - 0.0112 \times [C]) \ \ldots \ \text{equation 2}$$

wherein in the equation 1 and the equation 2, [C], [Si], [Mn] and [Cr] indicate contents in mass% of C, Si, Mn and Cr, respectively.

8. The manufacturing method of a strand for saw wire according to claim 7, wherein
a C content of the steel billet is 0.92 mass% or more,
the value of parameter P is 1050 or more,
the value of parameter Q is more than 440,
a structure of the hot-rolled wire rod contains 98% or more of pearlite in which a thickness of cementite is 0.03 $\mu$m

or less, and
a structure of the patenting material contains 99% or more of pearlite in which a thickness of cementite is 0.02 $\mu$m or less.

9. The manufacturing method of a strand for saw wire according to claim 7 or 8, wherein the steel billet further contains, in mass%, at least one kind selected from a group consisting of:

Ni: 1.0% or less;
Cu: 0.5% or less;
Mo: 0.5% or less;
V: 0.5% or less; and
B: 0.0050% or less.

10. The manufacturing method of a strand for saw wire according to any one of claims 7 to 9, wherein a finishing temperature of the hot rolling is 850°C or more.

11. The manufacturing method of a strand for saw wire according to any one of claims 7 to 10, wherein the performing final patenting treatment on the primary wire-drawn material so as to obtain a patenting material comprises:

keeping a temperature of the primary wire-drawn material within a range of 950°C to 1100°C; and
subsequently, keeping a temperature of the primary wire-drawn material within a range of 520°C to 600°C.

**Patentansprüche**

1. Ein Strang für Sägedraht, enthaltend:

in Massen%,
C: 0,87% bis 1,2%;
Si: 0,02% bis 2,0%;
Mn: 0,1% bis 1,0%; und
Cr: 0,5% oder weniger,
wobei
bezüglich der Gehalte von C, Si, Mn und Cr, ein Wert des Parameters P, dargestellt durch die folgende Gleichung 1, 1000 oder mehr ist,
ein P-Gehalt 0,015% oder weniger ist,
ein S-Gehalt 0,015% oder weniger ist,
ein N-Gehalt 0,01% oder weniger ist,
und optional
weiter enthaltend, in Massen%, mindestens eine Art, ausgewählt aus einer Gruppe bestehend aus:

Ni: 1,0% oder weniger,
Cu: 0,5% oder weniger,
Mo: 0,5% oder weniger,
V: 0,5% oder weniger, und
B: 0,0050% oder weniger, und

wobei der Rest aus Fe und unvermeidbaren Verunreinigungen besteht,
eine metallische Struktur drahtgezogenen Perlit in einem Flächenverhältnis von 98% oder mehr enthält,
ein Durchmesser 0,05 mm bis 0,18 mm ist,
eine Zugfestigkeit 4000 MPa oder mehr ist,
eine Differenz in Vickers-Härte zwischen einem Oberflächenabschnitt, bei dem eine Tiefe von einer Oberfläche des Stranges für Sägedraht innerhalb eines Bereiches des Durchmessers $\times$ 0,2 oder weniger ist und einem zentralen Abschnitt, bei dem ein Abstand von einer Mitte des Stranges für Sägedraht innerhalb eines Bereiches des Durchmessers $\times$ 0,2 oder weniger ist, 100 oder weniger ist und
eine Verdrehungszahl in einem Verdrehungstest, bei dem ein Probenhalter-zu-Probenhalter Abstand 100 mm ist und eine Spannung gleich einer Zugfestigkeit x Querschnittsfläche des Drahtes $\times$ 0,5 angelegt ist, 5 oder mehr ist:

$$P = 1098 \times [C] + 98 \times [Si] - 20 \times [Mn] + 167 \times [Cr] \dots \text{Gleichung 1}$$

wobei in der Gleichung 1, [C], [Si], [Mn] und [Cr] Gehalte von C, Si, Mn beziehungsweise Cr in Massen% anzeigen.

2. Der Strang für Sägedraht gemäß Anspruch 1, wobei
ein C Gehalt 0,92 Massen% oder mehr ist,
der Wert des Parameters P gleich 1050 oder mehr ist, und
die metallische Struktur den drahtgezogenen Perlit in einem Flächenverhältnis von 99% oder mehr enthält.

3. Der Strang für Sägedraht gemäß Anspruch 1 oder 2, wobei ein Verhältnis der Zugfestigkeit unter Verdrehen bezüglich der Zugfestigkeit in einem Zustand, in dem kein Verdrehen angewendet ist, 85% oder mehr ist; wobei die Zugfestigkeit unter Verdrehen durch 5-maliges Verdrehen des Stranges für Sägedraht gemessen wird, indem der Probenhalter-zu-Probenhalter Abstand 100 mal eines Drahtdurchmessers gesetzt wird und dann dieser einem Zugversuch unterzogen wird, bei dem die Zugfestigkeit gemessen wird; die Zugfestigkeit in einem Zustand, in dem kein Verdrehen angewendet ist, in dem Zugversuch durch eine Zugfestigkeit in einem Zustand, in dem kein Verdrehen angewendet ist, gemessen wird; dann ein Quotient durch Dividieren der Zugfestigkeit unter Verdrehen durch die Zugfestigkeit in einem Zustand, in dem kein Verdrehen angewendet ist, berechnet wird; der Test 5 mal mit jedem der Stränge für Sägedrähte durchgeführt wird; und das Verhältnis der Zugfestigkeit unter Verdrehen bezüglich der Zugfestigkeit in einem Zustand, in dem kein Verdrehen angewendet ist, der Mittelwert der fünf Quotienten ist.

4. Der Strang für Sägedraht gemäß einem der Ansprüche 1 bis 3, wobei eine Zugdehnung unter Verdrehen 2% oder mehr ist; wobei die Zugdehnung unter Verdrehen durch 5-maliges Verdrehen des Stranges für Sägedraht, indem der Probenhalter-zu-Probenhalter Abstand 100 mal eines Drahtdurchmesser gesetzt wird, und dann Unterziehen eines Zugversuchs, in dem die Zugfestigkeit gemessen wird, gemessen wird; der Test 5 mal mit jedem der Stränge für Sägedrähten durchgeführt wird; und die Zugdehnung bei Verdrehen der Mittelwert der fünf Messungen ist.

5. Der Strang für Sägedraht gemäß einem der Ansprüche 1 bis 4, wobei eine Restspannung eines Oberflächenabschnitts des Stranges für Sägedraht -100 MPa oder weniger ist.

6. Der Strang für Sägedraht gemäß einem der Ansprüche 1 bis 5, weiter enthaltend, in Massen%, mindestens eine Art, ausgewählt aus einer Gruppe bestehend aus:

   Ni: 1,0% oder weniger;
   Cu: 0,5% oder weniger;
   Mo: 0,5% oder weniger;
   V: 0,5% oder weniger; und
   B: 0,0050% oder weniger.

7. Ein Herstellungsverfahren eines Stranges für Sägedraht, umfassend:

   Durchführen von Warmwalzens eines Stahlblocks und Abkühlen des Resultierenden mit einer Rate von 10°C/Sekunde oder mehr, um einen warmgewalzten Walzdraht, dessen Durchmesser 6 mm oder weniger ist und eine Struktur, die 97% oder mehr an Perlit, in dem eine Dicke des Zementits 0,03 $\mu$m oder weniger ist, hat, zu erhalten;
   Durchführen von primärem Drahtziehen des warmgewalzten Walzdrahts, um ein primäres drahtgezogenes Material zu erhalten;
   Durchführen von abschließender Patentierungsbehandlung des primären drahtgezogenen Materials, um ein patentiertes Material, das eine Struktur, die 98% oder mehr an Perlit, in dem die Dicke des Zementits 0,02 $\mu$m oder weniger ist, hat, zu erhalten; und
   Durchführen von abschließendem Drahtziehen des patentierten Materials, indem eine Drahtziehdehnung $\varepsilon$ auf weniger als 4,5 gesetzt wird,
   wobei
   der Stahlblock enthält:

   in Massen%,

C: 0,87% bis 1,2%;
Si: 0,02% bis 2,0%;
Mn: 0,1% bis 1,0%; und
Cr: 0,5% oder weniger,

bezüglich der Gehalte von C, Si, Mn und Cr, ein Wert des Parameters P, dargestellt durch die folgende Gleichung 1, 1000 oder mehr ist,
ein P-Gehalt 0,015% oder weniger ist,
ein S-Gehalt 0,015% oder weniger ist,
ein N-Gehalt 0,01 % oder weniger ist, und
optional weiter enthaltend, in Massen%, mindestens eine Art, ausgewählt aus einer Gruppe bestehend aus:

Ni: 1,0% oder weniger,
Cu: 0,5% oder weniger,
Mo: 0,5% oder weniger,
V: 0,5% oder weniger und
B: 0,0050% oder weniger und

wobei der Rest aus Fe und unvermeidbaren Verunreinigungen besteht und
bezüglich der Drahtziehdehnung ε, ein Wert des Parameters Q, dargestellt durch die folgende Gleichung 2, 380 oder mehr ist:

$$P = 1098 \times [C] + 98 \times [Si] - 20 \times [Mn] + 167 \times [Cr] \ \text{... Gleichung 1}$$

$$Q = 99 \times [C] + 2{,}7 \times \exp(\varepsilon/2) \, / \, (0{,}075 - 0{,}0112 \times [C]) \ \text{... Gleichung 2}$$

wobei in der Gleichung 1 und der Gleichung 2, [C], [Si], [Mn] und [Cr] Gehalte von C, Si, Mn beziehungsweise Cr in Massen% anzeigen.

8. Das Herstellungsverfahren eines Stranges für Sägedraht gemäß Anspruch 7, wobei
ein C Gehalt des Stahlblocks 0,92 Massen% oder mehr ist,
der Wert des Parameters P gleich 1050 oder mehr ist,
der Wert des Parameters Q mehr als 440 ist,
eine Struktur des warmgewalzten Walzdrahts 98% oder mehr an Perlit, in dem eine Dicke des Zementits 0,03 $\mu$m oder weniger ist, enthält und
eine Struktur des patentierten Materials 99% oder mehr an Perlit, in dem eine Dicke des Zementits 0,02 $\mu$m oder weniger ist, enthält.

9. Das Herstellungsverfahren eines Stranges für Sägedraht gemäß Anspruch 7 oder 8, wobei der Stahlblock weiter enthält, in Massen%, mindestens eine Art, ausgewählt aus einer Gruppe bestehend aus:

Ni: 1,0% oder weniger;
Cu: 0,5% oder weniger;
Mo: 0,5% oder weniger;
V: 0,5% oder weniger; und
B: 0,0050% oder weniger.

10. Das Herstellungsverfahren eines Stranges für Sägedraht gemäß einem der Ansprüche 7 bis 9, wobei eine Endtemperatur des Warmwalzens 850°C oder mehr ist.

11. Das Herstellungsverfahren für einen Strang für Sägedraht nach einem der Ansprüche 7 bis 10, wobei das Durchführen von abschließender Patentierungsbehandlung des primären drahtgezogenen Materials, um ein patentiertes Material zu erhalten, umfasst:

Halten einer Temperatur des primären drahtgezogenen Materials innerhalb eines Bereichs von 950°C bis 1100°C; und

anschließendes Halten einer Temperatur des primären drahtgezogenen Materials innerhalb eines Bereichs von 520°C bis 600°C.

**Revendications**

1.  Brin pour fil de scie, contenant :

    en % en masse,
    C : 0,87% à 1,2%,
    Si : 0,02% à 2,0%,
    Mn : 0,1% à 1,0% ; et
    Cr : 0,5% ou moins,
    dans lequel :

    en ce qui concerne les teneurs en C, Si, Mn et Cr, une valeur d'un paramètre P représenté par l'équation 1 suivante est de 1000 ou plus,
    une teneur en P est de 0,015% ou moins,
    une teneur en S est de 0,015% ou moins,
    une teneur en N est de 0,01 % ou moins,
    et contenant éventuellement en outre, en% en masse, au moins un élément choisi dans un groupe constitué des suivants :

    Ni : 1,0% ou moins,
    Cu : 0,5% ou moins,
    Mo : 0,5% ou moins,
    V : 0,5% ou moins et
    B : 0,0050% ou moins et
    le restant est composé de Fe et d'impuretés inévitables,

    une structure métallique contient de la perlite tréfilée dans un rapport de section de 98% ou plus,
    une diamètre est de 0,05 mm à 0,18 mm,
    une résistance à la traction est de 4000 MPa ou plus,
    une différence de dureté Vickers entre une partie de surface, dans laquelle une profondeur depuis une surface du brin pour fil de scie se situe dans une plage du diamètre x 0,2 ou moins, et une partie centrale, dans laquelle une distance d'un centre du brin pour fil de scie se situe dans une plage du diamètre x 0,2 ou moins, est de 100 ou moins, et
    un nombre de torsions dans un test de torsion, dans lequel une distance de prise à prise est de 100 mm et où une tension égale à une résistance à la traction x une surface en coupe transversale du fil x 0,5 est appliquée, est de 5 ou plus :

    $$P = 1098 \times [C] + 98 \times [Si] - 20 \times [Mn] + 167 \times [Cr] \ldots \text{équation 1}$$

    dans lequel, dans l'équation 1, [C], [Si], [Mn] et [Cr] indiquent les teneurs en% en masse de C, Si, Mn et Cr, respectivement.

2.  Brin pour fil de scie selon la revendication 1, dans lequel :

    une teneur en C est de 0,92 en% en masse ou plus,
    la valeur du paramètre P est de 1050 ou plus et
    la structure métallique contient la perlite tréfilée dans un rapport de section de 99% ou plus.

3.  Brin pour fil de scie selon la revendication 1 ou la revendication 2, dans lequel un rapport de la résistance à la traction sous torsion à la résistance à la traction sans torsion est de 85% ou plus ;
    dans lequel la résistance à la traction sous torsion est mesurée en retordant le brin pour fil de scie 5 fois en réglant la distance prise à prise à 100 fois un diamètre du fil, et en le soumettant ensuite à un test de traction, dans lequel la résistance à la traction est mesurée ; la résistance à la traction sans torsion est mesurée dans le test de traction par une résistance à la traction sans torsion ; ensuite, un quotient est calculé en divisant la résistance à la traction sous torsion par la résistance à la traction sans torsion ; le test est effectuée 5 fois sur chacun des brins pour fils de scie ; et le rapport de la résistance à la traction sous torsion à la résistance à la traction sans torsion est la valeur moyenne des cinq quotients.

4. Brin pour fil de scie selon l'une quelconque des revendications 1 à 3, dans lequel un allongement à la traction sous torsion est de 2% ou plus ;
dans lequel l'allongement à la traction sous torsion est mesurée en retordant le brin pour fil de scie 5 fois en réglant la distance prise à prise à 100 fois le diamètre du fil et en le soumettant ensuite à un test de traction, dans lequel l'allongement à la traction est mesuré ; le test est effectué 5 fois sur chacun des brins pour fils de scie ; et l'allongement à la traction sous torsion est la valeur moyenne des cinq mesures.

5. Brin pour fil de scie selon l'une quelconque des revendications 1 à 4, dans lequel une contrainte résiduelle d'une partie de surface du brin pour fil de scie est de - 100 MPa ou moins.

6. Brin pour fil de scie selon l'une quelconque des revendications 1 à 5, contenant en outre, en% en masse, au moins un élément choisi dans un groupe constitué des suivants :

 Ni : 1,0% ou moins ;
 Cu : 0,5% ou moins ;
 Mo : 0,5% ou moins ;
 V : 0,5% ou moins ; et
 B : 0,0050% ou moins.

7. Procédé de fabrication d'un brin pour fil de scie, comprenant les étapes consistant à :

 effectuer un laminage à chaud sur une billette d'acier et refroidir le produit obtenu à raison de 10°C/seconde ou plus de manière à obtenir un fil machine laminé à chaud dont le diamètre est de 6 mm ou moins et ayant une structure contenant 97% ou plus de perlite, dans laquelle se trouve de la cémentite d'une épaisseur de 0,03 $\mu$m ou moins ;
 effectuer un tréfilage primaire sur le fil machine laminé à chaud de manière à obtenir un matériau tréfilé primaire ;
 effectuer un traitement de patentage final sur le matériau tréfilé primaire de manière à obtenir un matériau de patentage ayant une structure contenant 98% ou plus de perlite, dans laquelle se trouve de la cémentite d'une épaisseur de 0,02 $\mu$m ou moins ; et
 effectuer un tréfilage de finition du matériau de patentage en réglant une contrainte de tréfilage $\varepsilon$ à moins de 4,5, dans lequel :

  la billette d'acier contient :

   en% en masse,
   C : 0,87% à 1,2%,
   Si : 0,02% à 2,0%,
   Min : 0,1% à 1,0%; et
   Cr : 0,5% ou moins,

  en ce qui concerne les teneurs en C, Si, Mn et Cr, une valeur d'un paramètre P représenté par l'équation 1 suivante est de 1000 ou plus,
  une teneur en P est de 0,015% ou moins,
  une teneur en S est de 0,015% ou moins,
  une teneur en N est de 0,01 % ou moins,
  et contenant éventuellement en outre, en% en masse, au moins un élément choisi dans un groupe constitué des suivants :

   Ni : 1,0% ou moins,
   Cu : 0,5% ou moins,
   Mo : 0,5% ou moins,

V : 0,5% ou moins et
B : 0,0050% ou moins et
le restant est composé de Fe et d'impuretés inévitables, et

concernant la contrainte de tréfilage $\varepsilon$, une valeur d'un paramètre Q représenté par l'équation 2 suivante est de 380 ou plus :

$$P = 1098 \times [C] + 98 \times [Si] - 20 \times [Mn] + 167 \times [Cr] \ldots \text{ équation 1}$$

$$Q = 99 \times [C] + 2,7 \times \exp(\varepsilon/2)/(0,075 - 0,0112 \times [C]) \ldots \text{ équation 2}$$

dans lequel, dans l'équation 1 et l'équation 2, [C], [Si], [Mn] et [Cr] indiquent les teneurs en% en masse de C, Si, Mn et Cr, respectivement.

8. Procédé de fabrication d'un brin pour fil de scie selon la revendication 7, dans lequel :

une teneur en C de la billette d'acier est de 0,92% en masse ou plus,
la valeur du paramètre P est de 1050 ou plus,
la valeur du paramètre Q est supérieure à 440,
une structure du fil machine laminé à chaud contient 98% ou plus de perlite, dans laquelle se trouve de la cémentite d'une épaisseur de 0,03 $\mu$m ou moins et
une structure du matériau de patentage contient 99% ou plus de perlite, dans laquelle se trouve de la cémentite d'une épaisseur de 0,02 $\mu$m ou moins.

9. Procédé de fabrication d'un brin pour fil de scie selon la revendication 7 ou la revendication 8, dans lequel la billette d'acier contient en outre, en% en masse, au moins un élément choisi dans un groupe constitué des suivants :

Ni : 1,0% ou moins ;
Cu : 0,5% ou moins ;
Mo : 0,5% ou moins ;
V : 0,5% ou moins ; et
B : 0,0050% ou moins.

10. Procédé de fabrication d'un brin pour fil de scie selon l'une quelconque des revendications 7 à 9, dans lequel une température de finition du laminage à chaud est de 850°C ou plus.

11. Procédé de fabrication d'un brin pour fil de scie selon l'une quelconque des revendications 7 à 10, dans lequel la réalisation du traitement de patentage final sur le matériau tréfilé primaire de manière à obtenir un matériau de patentage comprend :

le maintien d'une température du matériau tréfilé primaire dans une plage de 950°C à 1100°C ; et
ensuite, le maintien d'une température du matériau tréfilé primaire dans une plage de 520°C à 600°C.

# FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1528115 A
- JP 10309627 A
- JP 2002212676 A
- JP 2003334606 A
- JP 8291369 A
- JP 6293938 A
- JP 11199980 A
- JP 2009280836 A
- JP 11323496 A
- JP 11269607 A